(19) Europäisches Patentamt / European Patent Office / Office européen des brevets

(11) **EP 4 252 516 B1**

(12) **FASCICULE DE BREVET EUROPEEN**

(45) Date de publication et mention de la délivrance du brevet:
**12.03.2025 Bulletin 2025/11**

(21) Numéro de dépôt: **22210746.8**

(22) Date de dépôt: **01.12.2022**

(51) Classification Internationale des Brevets (IPC):
***A01C 21/00*** *(2006.01)*

(52) Classification Coopérative des Brevets (CPC):
**A01C 21/007**

(54) **MÉTHODE GÉNÉRIQUE ET INTEROPÉRABLE DE FERTILISATION RAISONNÉE POUR L AGRICULTURE DURABLE**

ALLGEMEINE UND INTEROPERABLE METHODE DES INTEGRIERTEN DÜNGEMITTELMANAGEMENTS FÜR NACHHALTIGE LANDWIRTSCHAFT

GENERIC AND INTEROPERABLE METHOD OF INTEGRATED FERTILIZER MANAGEMENT FOR SUSTAINABLE AGRICULTURE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **01.04.2022 FR 2203003**
**01.04.2022 FR 2203007**
**13.09.2022 FR 2209166**

(43) Date de publication de la demande:
**04.10.2023 Bulletin 2023/40**

(73) Titulaire: **Polyor SARL**
**54000 Nancy (FR)**

(72) Inventeur: **CLAUDE, Pierre-Philippe**
**54000 Nancy (FR)**

(56) Documents cités:
**EP-A1- 3 821 688     WO-A1-2013/168483**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La fertilisation raisonnée pour l'agriculture durable, nécessite le calcul de doses prévisionnelles d'engrais azotés ; la fameuse « dose X » selon la méthode dite « du bilan » (Comifer 2017). Or, l'utilisation d'une quelconque dose prévisionnelle n'est donc pas toujours synonyme de durabilité puisqu'il faudrait avoir préalablement identifié, précisément, quel objectif de rendement peut être durablement atteint et caller la dose prévisionnelle sur cet objectif de rendement durable. Donc, en l'état ces doses ne sont ni précises, ni nécessairement durables. En réponse à cela, des alternatives ont été proposées, soit en abandonnant complètement la notion de doses prévisionnelles et d'objectifs de rendements (Ravier et al. 2016), soit en intégrant l'efficacité d'intrants à affectant les besoins en azote de la culture (EP3335536).

Il existe aussi plusieurs approches pour l'évaluation de la durabilité de pratiques culturales. Il est généralement établi que la durabilité est avant tout le propre de la pratique culturale, le *rendement azoté,* RDN, n'étant que tributaire de cette dernière.

Au contraire, à la lumière d'EP22152629.6, il eut été possible de concevoir une approche définissant plutôt la durabilité de ce RDN (kg-N$_{grain}$/hectare), la *pratique culturale* n'étant plus qu'accessoire. Cela dit, une telle approche nécessiterait un estimé précis des rendements pluriannuelles et quinquennales, mais aussi des rendements de référence pour la campagne en cours. Ces dernières, actualisées en temps utile dès l'automne, sont parfois, même souvent, difficilement obtenables. Il serait avantageux de pouvoir s'en passer. De plus, les susdites durabilités des RDN et besoins unitaires des pratiques culturales ne sont pas nécessairement toujours stables à travers le temps à divers taux de fertilisation azotée. Cela rendra le conseil agricole encore plus complexe puisque plusieurs récoltes seront nécessaires pour obtenir une série temporelle interprétable afin de repérer les niveaux de RDN durables.

Résoudre *préemptivement* (sic, angl.) ces problèmes techniques nécessite donc une appréciation *objective* de la durabilité de la pratique culturale via son niveau de *rendement azoté,* RDN, i.e. la quantité d'azote mobilisé (contenu) dans le grain récolté et exporté de la parcelle (alias *off-take,* angl.).

### *Parangonnage et durabilité*

Il fallut dans un premier temps adapter EP20194102.8 (Équation 1) et déterminer l'efficacité, *e,* d'un quelconque traitement à l'essai sur la parcelle (TRT, ou « T »). Les rendements - en grains (RDT, _rdt), les *rendements azotés* (RDN, _rdn) et par kg-N$_{fertilisant}$/hectare, ou *rendement unitaire* (RUN, _run) sont ajustés par un *indice de la productivité inhérente en biomasse* de la parcelle, iSQ - selon Toth et al. 2013 par exemple, de manière à comparer rationnellement les rendements provenant de différentes parcelles. Cet indice de l'efficacité du traitement, TSQ = rendements/iSQ, est par la suite comparé à une référence durable, *r*; eTSQ = TSQ/rTSQ. Pareillement pour ASQ, eASQ, l'effet de la météorologie sur la base des rendements moyens aux niveaux local ou régional, et QSQ, eQSQ, l'objectif de rendement actuel avant modification de la pratique culturale ; cet objectif de rendement conventionnel est souvent établi sur la base des moyennes quinquennales locales ou régionales. Formellement (Équation 1) ;
[Math 1]

**Équation 1** (EP20194102.8) :

$$eTRT = \left[\frac{TSQ}{rTSQ} - 1\right] - \left[\frac{QSQ}{rQSQ} - 1\right] - \left[\frac{ASQ}{rASQ} - 1\right]$$

EP20194102.8 détaille la mise en œuvre de cette approche. À noter qu'à partir des références rTSQ *(alias* rRSQ ; *infra*), rQSQ et rASQ on peut facilement rétro-calculer rTSQ x iSQ et réobtenir des rendements agronomiques RDT, RDN et RUN plus lisibles conventionnellement.

L'idée est de trouver les références pédoclimatiques - rTSQ, rASQ et rQSQ - qui leurs sont associées, i.e. des parangons (*benchmarks,* angl.) Trois modèles séparés sont proposés dans EP20194102.8 pour cela. On peut donc déterminer rTSQ fonction non seulement des variables pédoclimatiques et agronomiques (Var_APC) mais aussi des valeurs eASQ = ASQ/rASQ et eQSQ = QSQ/rQSQ (Équation 2) ;
[Math 3]

**Équation 2** (EP20194102.8) :

$$rTSQ = gbm(Var\_APC, eASQ, eQSQ)$$

Or, si on pose strictement eTRT ≡ 0,00 comme c'est nécessairement le cas lors d'un galop d'essai sans modification de l'itinéraire technique et sachant que TSQ/rTSQ -1 = eTSQ, on obtient plus simplement l'Équation 3 tirée de EP22152629.6 ;
[Math 4]

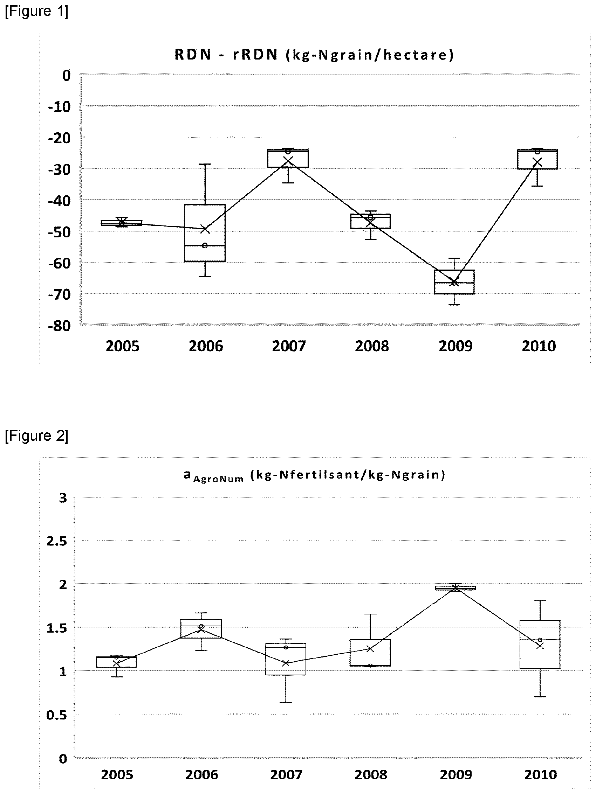

**Équation 3** (cf. figures 1 & 2 d'EP22152629.6) :

$$eTSQ = eQSQ + eAQS$$

L'efficacité relative TSQ/rTSQ = eTSQ est la résultante de l'objectif de rendement par rapport à sa propre référence pédoclimatique, eQSQ = QSQ/rQSQ, et l'actualisation de la climatologie - la météorologie - par rapport à sa propre référence pédoclimatique eASQ = ASQ/rASQ. Cela revient à savoir si eQSQ est bel et bien fonction d'un itinéraire technique durable au sens entendu.

L'objectif de rendement peut maintenant être évalué quant à sa durabilité par rapport à une droite normale ajustée illustrant une adéquation parfaite entre le rendement obtenu (TSQ) et sa référence pédoclimatique (rTSQ) dur fait que eTSQ = eQSQ + eASQ. En effet, l'écart de la valeur observée expérimentalement (TSQ) par rapport à une droite [1:1] → TSQ = rTSQ est la somme de eASQ et eQSQ sur lesquelles l'agriculteur-agronome a le loisir d'agir afin d'améliorer s'il le faut la durabilité socio-économique et environnementale.

Important. eTSQ lorsque eTRT ≡ 0,00 est une *mesure* de la durabilité parce qu'elle intègre la notion d'objectif de rendements, notion socio-économique, et la référence pédoclimatique durable, rRSQ, au-delà de laquelle ces rendements sont trop importants pour être produits durablement compte tenue de la productivité inhérente de ce pédoclimat. Donc, que lorsque **eTRT ≡ 0 | TSQ ≡ RSQ.** Cela évite de confondre un rendement attribuable à un traitement - traitement qui dans les faits n'existe pas puisqu'il s'agit ici d'un galop d'essai (supra), et le rendement effectivement récolté et a priori durable si et seulement si RSQ = rRSQ → [1:1] : cf. figures 1 & 2 d'EP22152629.6.

### Stabilité de la durabilité

La stabilité des rendements est aussi une composante de l'agriculture durable. Surtout appréciée en amélioration variétale (Reckling et al. 2021), il est aujourd'hui important d'étendre l'évaluation routinière de la stabilité aux pratiques culturales les plus durables. Une pratique culturale n'est durable que si elle donne des rendements durables à travers le temps. Une pratique culturale consistant à combiner différents types d'intrants choisis parmi une panoplie de cultivars, engrais, produits phytos et biostimulants devrait toujours, année après année, produire des rendements durables. Or, à ce jour, l'appréciation de la durabilité de pratiques culturales est au mieux ponctuelle, campagne par campagne (EP22152629.6).

A priori, une solution technique consisterait donc à identifier au sein d'une quelconque série temporelle les rendements azotés, RDN, et/ou unitaires, RUN, de pratiques culturales les plus durables au sens de EP22152629.6. À savoir ;

- la détermination des rendements agronomiques en grains (RDT), azotés (RDN) et par kg-N$_{fertilisan}$/hectare (RUN) divisés par un certain indice, iSQ, de la productivité agro-pédoclimatique de la parcelle de manière à obtenir les valeurs de rendement ajustées RSQ_rdt, RSQ_rdn et RSQ_run, correspondant à RDT, RDN et RUN, respectivement,

- pour un même taux de fertilisation azotée, TUN, la comparaison de RSQ_rdt, RSQ_rdn et RSQ_run à leurs références réputées durables dites rRSQ_rdt, rRSQ_rdn et rRSQ_run, respectivement, de manière à évaluer annuellement la durabilité de la pratique culturale,

- la répétition de cette évaluation annuelle pour une même parcelle agronomique sur au moins trois (3) campagnes de manière à générer des séries temporelles comprenant au moins (3) éléments de comparaison,

La stabilité de la durabilité d'une certaine pratique culturale n'est pas nécessairement assurée à travers le temps du simple fait que son rapport RSQ/rRSQ est transitoirement proche ou égale à 1. En d'autres mots, une même pratique culturale peut être durable une année, mais pas l'année suivante rendant le conseil agronomique impossible à ce stade. Ici à titre d'exemple, un blé dur d'hiver en France, Plaza-Bonilla et al. 2017. Cette solution technique est donc en l'état peu ou pas réalisable économiquement ; voir en ce sens la **Figure 1** à titre d'essai.

*Rétro-calcul des doses prévisionnelles d'engrais*

En fertilisation raisonnée, il faut aussi déterminer, dispenser & appliquer plein champ les doses prévisionnelles d'engrais azoté, TUN, associées à ces éventuels objectifs de rendements azoté, RDN, durables. A priori, en agriculture durable la solution technique eut consisté à rétro-calculer une dose-prévisionnelle d'engrais-N, TUN, après avoir constaté la durabilité stable du RDN qui lui est associée. Un conseil en agriculture durable applicable aux grandes cultures agronomiques devrait permet cela et comporter un estimé de RSQ_run réputé durable par rapport à sa référence rRSQ_run, lorsque $(RSQ_{-run})/(rRSQ\_run) \approx 1.00$ sachant que le rendement unitaire de l'azote fertilisant, RUN, est ici défini comme $(rRSQ\_run * iSQ)$, et iSQ un indice de la productivité inhérente de la parcelle. Plus précisément, une telle approche comportait ;

- le taux de fertilisation azoté, TUN, rétro-calculée du rRSQ_run correspondant et directement préconisée comme dose prévisionnelle pour la pratique culturale, soit,
- le besoin unitaire de la pratique culturale, $a_{AgroNum}$, rétro-calculé du rendement azoté, RDN, durable au sens entendu lorsque RDN = $(rTSQ_{rdn} * iSQ)$ et $a_{AgroNum}$ = $(TUN/RDN)$, soit,
- le besoin unitaire de la pratique culturale, $a_{AgroNum}$, correspondant à ce RSQ_run réputé durable sachant qu'$a_{AgroNum}$ = $1/\sqrt{(RUN \times d\_RUN)}$ et $RUN = (run\wedge2)/d\_RUN$ lorsque *run* est le rendement unitaire *simple,* run = [RDN/TUN], et $d_{RUN}$ un certain taux de dégradation de *run* selon TUN, $d_{RUN}$ = $a * TUN\wedge b,$ les coefficients a & b étant connus empiriquement et, enfin,
- le TUN durable = $a\_AgroNum\_rdn \times RDN,$ RDN étant ici l'objectif de rendement azoté durable, y compris tel qu'actualisé en sortie d'hiver.

Or, ces besoins unitaires de pratiques culturales s'avéreront probablement eux aussi *instables,* variant de campagne en campagne, rendant ainsi le conseil agronomique ambigüe. À titre d'essai, voir à la **Figure 2** le besoin unitaire azoté, $a_{AgroNum}$, pour un même itinéraire technique (Plaza-Bonilla et al. 2017) d'une certaine pratique culturale varie bel et bien d'année en année. En l'état, il est donc impossible de simplement appliquer simplement cette notion de besoin unitaire de la pratique culturale à l'objectif de rendement azoté de l'année en cours pour en assurer la durabilité via un dose prévisionnelles adaptée à ce niveau de rendement.

### Solution technique proposée - AgroNum™

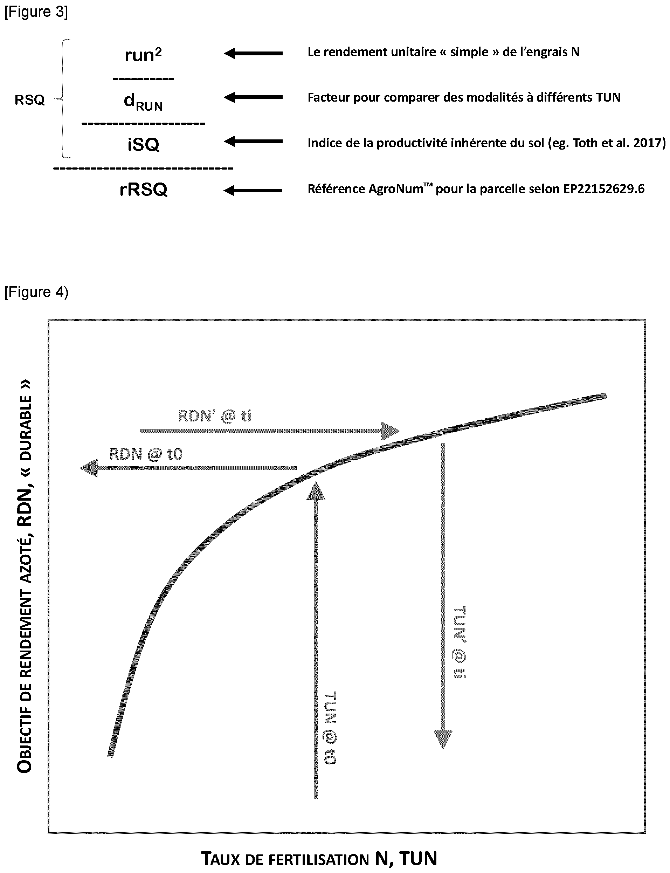

La solution technique proposée est une méthode de fertilisation raisonnée permettant de déterminer directement une dose prévisionnelle durable d'engrais-N, TUN, à l'aide d'une courbe de réponse des rendements azotés (RDN) durables à de tels taux de fertilisation azotée **(Figure 4).** Ce couple [TUN ↔ RDN] assure la durabilité de la pratique culturale correspondante, peu importe les types de cultures, précédents ou intrants qui la composent. La stabilité de la durabilité de la pratique culturale, ainsi que la dose prévisionnelle d'engrais azotés pour l'obtention du rendement azoté, RDN, durable sur cette parcelle sont assurées année après année par le rétro-calcul dynamique au temps $t_i$ - sortie hiver par exemple, par rapport au temps $t_o$ - semis automnaux par exemple, du *besoin unitaire de la pratique culturale,* $a_{AgroNum}$ sur la base des RUN réputés durables selon EP22152629.6. Il en résulte une série de *couples* [TUN ↔ RDN] durables représentés simplement sur et par la susdites courbes de réponse à l'azote.

L'effet technique de cette invention est très manifeste pour l'expérimentateur et l'agronome conseil qui devraient anciennement établir des bandes à TUN = 0, 60, 90, 120, etc. pour obtenir de telles courbes der réponses. Or ces dispositifs sont le plus souvent quasi in-obtenables en conseil agronomiques, et de plus très imprécis au niveau de la parcelle. Ces courbes de réponse à l'azote fertilisant furent donc développées que régionalement ou localement par des chambres d'agricultures ou des instituts techniques, et transposées grossièrement au niveau de à la parcelle.

L'invention permet d'obtenir facilement une courbe de réponse pour n'importe quelle parcelle agricole, grandes cultures non-Fabaceae à graines, peu importe le précédent et la pratique culturale, et cela tout en assurant que les rendements azotés (RDN) conformes à cette courbe de réponse soient nécessairement durables. L'invention affine précisément par la suite la dispense (*bulking,* angl), la calibration et l'application de telles doses prévisionnelles d'engrais N dans la cadre d'une fertilisation raisonnée avec pilotage intra-saisonnier et/ou intra-parcellaire.

Il s'agit donc d'une **méthode générique et interopérable de fertilisation raisonnée pour l'agriculture durable au niveau de la parcelle** comportant une série de *rendements azotés,* RDN (kg-$N_{grain}$/hectare), correspondant à divers *taux de fertilisations azotées,* TUN (kg-$N_{fertilisan}$/hectare), et *rendements unitaires,* RUN (kg-$N_{grain}$/kg-$N_{fertilisant}$), propices à la *conservation de la matière organique du sol* et applicable à des parcelles agricoles de grandes cultures non-Fabaceae telles que les cultures céréalières d'hivers et de printemps, le colza, le tournesol et le maïs-grain, et comprenant la récolte de l'ensemble de la parcelle sans établissement de bandes-essais, ainsi que *l'évaluation de la durabilité* de la pratique culturale en œuvre lors de l'élaboration du *rendement en grain,* RDT, et/ou selon les intentions, habitudes et souhaits de l'agriculteur/rice ;

- un protocole de pilotage de la fertilisation azotée pour la dispense, le fractionnement, l'application au champ et/ou l'éventuel pilotage intra-saisonnier de ces différentes fractions de doses prévisionnelles d'engrais azoté, TUN,
- une actualisation dynamique au fil du temps, intra-annuellement, de l'objectif de rendement selon la météorologie et/ou les cumuls thermiques et hydriques constatés et caractéristiques du lieu où est située la parcelle agricole, ou encore,
- une approche d'agriculture de précision comportant une modulation intra-parcellaire des doses d'intrants à la production appliquées, notamment des susdites doses-prévisionnelles de fertilisation azotée, TUN,

caractérisée en ce que ces couples [RDN ↔ TUN] durables sont rapportées sur une seule et unique courbe de réponse des RDN à TUN, *générique* et applicable à l'ensemble des susdites grandes cultures implantées sur la parcelle agricole, peu importe le type et la nature des intrants composant l'itinéraire de la pratique culturale sur cette parcelle, de manières à ce que ces TUN correspondant à ces RDN fassent maintenant office de doses prévisionnelles, et vice et versa, que ces RDN correspondant à ces TUN, d'objectifs de rendements durables.

*L'évaluation de la durabilité* d'une quelconque pratique culturale (EP22152629.6) consiste en une méthode d'évaluation et de parangonnage de la durabilité de pratiques culturales au niveau de la parcelle agricole comprenant la récolte de l'ensemble de la parcelle sans établissement de bandes-essais (EP20194108.2, Équation 1), à savoir ;

- la détermination d'une *référence pédoclimatique,* rTSQ, pour la parcelle,
- la détermination de la *performance agronomique* de l'intrant, TSQ, pour la parcelle,
- la mise en relation de TSQ par rapport à rTSQ donnant eTSQ = [TSQ/rTSQ - 1],

et de même pour ce qui concerne eASQ = [ASQ/rASQ - 1] et eQSQ = [QSQ/rQSQ - 1], de manière comptabiliser complétement l'effet eTRT non seulement de l'intrant (T) sur le rendement observé mais aussi celui du choix de l'objectif de rendement quinquennal moyen (Q) tel qu'affecté par la météorologie de l'année en cour (A) caractérisée en ce que l'intrant en question n'en n'est pas un et que l'évaluation de l'efficacité relative (e) d'un tel pseudo-traitement - un galop d'essai (*dry run,* angl.), ne modifie pas l'actuel pratique culturale.

Il en résulte que l'effet du traitement T, eTRT, est nulle, i.e. eTRT ≡ 0, sachant que formellement eTRT = [eTSQ - eQSQ - eASQ] et donc maintenant eTSQ = [eQSQ + eASQ] lorsque que eQSQ = QSQ/rQSQ et eASQ = ASQ/rASQ puisque que QSQ est l'objectif de rendement conventionnel pour la parcelle par rapport à un certain indice de la productivité en biomasse de la parcelle, iSQ, ASQ le potentiel de rendement local ou régional affecté par la climatologie réalisée cette année là - i.e. la météorologie - rQSQ et rASQ les deux références pédoclimatiques propres à QSQ et ASQ, et plus particulièrement, ici, en ce que ;

- la durabilité de l'itinéraire technique est assurée lorsque TSQ = rTSQ,
- si le différentiel TSQ - rTSQ est positif l'itinéraire technique est *trop intensif* et l'objectif de rendement doit être réduit, ou dans le cas contraire,
- si ce différentiel TSQ est négatif l'itinéraire technique est *trop extensif* et ce même objectif de rendement doit, ou du moins peut être augmenté,

sachant que le degré de durabilité de l'itinéraire technique est proportionnel à la distance verticale [y:x] suivant l'ordonnée (y) séparant cette valeur de TSQ = rendement/iSQ de la droite [y:x] = [1:1] décrivant une correspondance parfaite entre TSQ et rTSQ.

TSQ et rTSQ sont exprimés en termes de *rendement unitaire* (RUN ; kg-$N_{grain}$/kg-$N_{fertilisant}$), de sorte que (r)RUN = (r)$TSQ_{RUN}$ x iSQ, (r)RUN étant ici égale à $run^2$/$d_{RUN}$ sachant que run est le rendement unitaire *simple* avant correction selon $d_{RUN}$ = [$a$ · $TUN^{-b}$], les coefficients $a$ et $b$ provenant de relations empiriques décrivant la décroissance de run selon l'augmentation de TUN en équivalents kg-$N_{fertilisan}$/hectare. Ces coefficients $a$ et $b$ déterminés empiriquement se situent généralement entre 1200 ↔ 1500 et 1,40 ↔ 1,60, respectivement. Ici, le plus avantageusement, $a$ est égale à 1400 et $b$ à 1,50.

Important. TSQ et rTSQ, lorsque eTRT ≡ 0, c'est-à-dire en absence de modifications de la pratique culturale lors d'un galop d'essai sans nouveaux intrants à l'essai sur la parcelle, font ici référence aux rendements actuels récoltés, RSQ, et rendements de références durables, rRSQ, respectivement, ces derniers, rRSQ, faisant ici office de parangons (*benchmark,* angl.) de durabilité.

Donc, par durable il est convenu que les $RSQ_{RUN}$ trop élevés ou trop faibles par rapport à la valeur $rRSQ_{RUN}$ durable correspondant sont systématiquement exclus du jeu de données prédictif. Cela implique que RSQ & rRSQ sont jugés suffisamment similaires lorsque la différence entre RSQ et rRSQ exprimée en termes de RUN, $RSQ_{RUN}$ & $rRSQ_{RUN}$, est de +/- 5 à 15%, plus précisément +/- 8 à 12% et avantageusement environ +/- 10% de celle de rRSQ. RSQ & rRSQ sont ainsi exprimés en termes de *rendement unitaire,* RUN (kg-$N_{grain}$/kg-$N_{rertilisant}$), c'est-à-dire le rendement azoté, RDN, par kg-$N_{fertilisant}$ (TUN; kg-$N_{fertilisant}$/hectare) mais calculé, ajusté, de la sorte ; RUN = $run^2$/$d_{RUN}$ lorsque que - encore une fois, run est le rendement unitaire *simple* et $d_{RUN}$ = [$a$ · TUN$^{-b}$], **a** et **b** étant des coefficients empiriques décrivant la diminution progressive de l'exécution avec l'augmentation de TUN applicable à l'ensemble des susdites grandes cultures.

Enfin, les références pédoclimatiques rTSQ, rRSQ, rQSQ et rASQ sont déterminées à l'aide d'une quelconque méthode prédictive dite d'intelligence artificielle (eg. Prokhorenkova et al. 2019, Friedman et al. 2001) appliquée à un vaste ensemble de variables agropédoclimatiques (Var_APC ; Équation 2) provenant de diverses sources telles que AppEEARS 2020, Rodell et al. 2004, Teng et al. 2018, Myneni et al. 2015, Panagos et al. 2012, etc. Cette approche numérique à la fertilisation raisonnée en agriculture durable est décrite dans EP20194102.8 et EP22152629.6.

L'évaluation de la durabilité des pratiques culturales est donc sujette à un *triple ajustement,* selon iSQ, $d_{RUN}$ & rRSQ **(Figure 3).** Explicitement, AgroNum™ exprime *rationnellement* les rendements agronomiques, azotés - RDN, notamment, de grandes cultures non-Fabaceae, et cela sans risques de dérive numérique. Les rendements unitaires simples, run, sont ajustés par une valeur, $d_{RUN}$, standardisée fonction du taux de fertilisation de manière à comparer des modalités à taux de fertilisation, TUN, différents. Ce premier ratio est ensuite ajusté selon un quelconque indice de la productivité inhérente de la parcelle, iSQ, de manière à comparer des parcelles de lieux et agro-pédoclimats contrastés. Enfin, ces rendements unitaires doublement ajustés sont comparés à la référence durable, rRSQ, propre à la parcelle en ce lieu.

Pour faciliter le calcul de ces couples [RDN ↔ TUN], il est utile faire appel à un nouveau concept ; le besoin unitaire de la pratique culturale, a_AgroNum, ou encore $a_{AgroNum}$, au choix. La valeur d'$a_{AgroNum}$ est caractéristique de la pratique culturale durable et fonction de TUN et RDN. $a_{AgroNum}$ est dérivé de RUN = run²/$d_{RUN}$ ;

$$a_{AgroNum} = \frac{1}{\sqrt{RUN \cdot d_{RUN}}}$$

Connaissant RDN, l'objectif de rendement azoté durable souhaité, on peut donc facilement rétro-calculé le taux de fertilisation azotée, TUN, qui lui corresponds ;

$$TUN = RDN \; x \; a_{AgroNum}$$

Ou encore, on peut faire le contraire en rétro-calculant l'objectif de rendement azoté, RDN, connaissant le taux de fertilisation azoté, TUN, que l'on souhait valorisé ;

$$RDN = TUN \; / \; a_{AgroNum}$$

Rappel. La durabilité de la pratique culturale est évaluée en faisant coïncider RSQ et rRSQ lorsque eTRT ≡ 0 (Équation 3). La durabilité est déterminée pour la parcelle en fonction d'un vaste ensemble de données agropédoclimatiques (Var_APC ; Équations 2 & 3) et l'ajustement par iSQ, un indice de la productivité inhérente de la parcelle (eg. Toth et al. 2013). L'algorithme d'intelligence artificielle génère ensuite la valeur précise de rRSQ pour la parcelle, toute en évitant la partialité d'optima locaux ou de comparaisons appariées trop simples avec des parcelles avoisinantes. Une valeur d'eRSQ trop élevée par rapport à la référence de durabilité [1:1] (cf. figures 1 & 2, EP22152629.6) désigne un itinéraire technique non durable ; une valeur eTSQ en retrait (en dessous) de cette norme ajustée indique au contraire une sous-exploitation des ressources agropédoclimatiques durablement disponibles sur cette parcelle.

En effet, selon EP20194108.2 & EP22152629.6, l'additivité de d'eASQ & eQSQ explique l'essentiel de l'écart entre les rendements récoltés et la droite [x:y] de référence [1:1] indiquant la durabilité socio-économique et environnementale au sens de Brundtland et al. 1987. En pratique, eRSQ peut être modifié qu'en ajustant l'actuel objectif de rendement, Q, en adaptant la pratique culturale ; la météorologie, A, est, elle, donnée, imposée en sorte par mère nature.

Cette spécificité géospatiale des rRSQ permet de comparer plusieurs traitements simultanément sur une même parcelle. Seuls les traitements, RSQ, les plus proches de la référence [1:1] (cf. EP22152629.6, figure 2) dénotent des rendements - RDT, RDN ou RUN, durables. rRSQ dicte donc quelle combinaison de traitements sera réputée durable. Par exemple, à ladite figure 2 d'EP22152629.6 un faible rRSQ indiquera que le traitement 5 est durable, tandis que des valeurs rRSQ plus faibles ou élevées, respectivement, identifieront plutôt les traitements 1 ou 3 comme durables (cf. figure 2, EP22152629.6).

**Exemples d'application de l'invention - AgroNum™**

Au **Tableau 1** à la page 10, un exemple de compilation d'une partie des données pour une parcelle en Hongrie (NUTS2 HU32, LAT 47.38877 LON 20.23549) de 2014 à 2020 pour chacune des 11 grandes cultures non-Fabaceae, CLT, et autant de résidus de culture au sol, RCS (ici, que BTH, blé tendre d'hiver, à titre d'exemple), et cela à des taux de fertilisation azotée, TUN, allant de 1 à 210 kg-$N_{fertilisan}$/ha par incréments de 30 (ici, à titre d'exemple, que 120. L'indice de productivité, iSQ, en ce lieu est de 5.00. Plus de 8000 simulations pour cette parcelle agricole, dont seules les coordonnées GPS sont communiquées via une interface *interopérable* telle que www.polyor.fr. Cela vaut pour toutes les parcelles agricoles à travers l'Europe. Trois (3) exemples d'applications, telles que proposées aux agriculteurs, sont présentées aux **Figures 4, 5 & 6**. À noter que $a_{AgroNum}$ et RDN sont inaffectés par le type de grande culture, CLT. Ces valeurs d'$a_{AgroNum}$ et RDN sont générées à l'aide de l'approche AgroNum décrite dans EP20194108.2, et réputées durables selon les parangons (*benchmarks,* angl.) établis selon EP22152629.6.

AgroNum™ est très précis et les objectifs de RDN durables et leurs TUN correspondantes peuvent facilement êtres estimés, quitte à ajuster la dose prévisionnelle dès la sortie d'hiver en fonction des cumuls thermiques et pluviométriques. AgroNum™ est donc interopérable avec les technologies de prévisions des rendements (*yield forcasting,* angl.). Pour chacune de ces exemples, plusieurs campagnes de 2014 à 2020 comprenant ici 8 taux de fertilisation azotée (TUN, kg-$N_{fertilisant}$/ha). On a ainsi calculé le besoin unitaire de la pratique culturale, $a_{AgroNum}$, selon l'inverse du rendement azoté unitaire simple run = RDN/TUN, et le rendement azoté unitaire ajusté RUN = $run^2/d_{RUN}$ généré par l'algorithme.

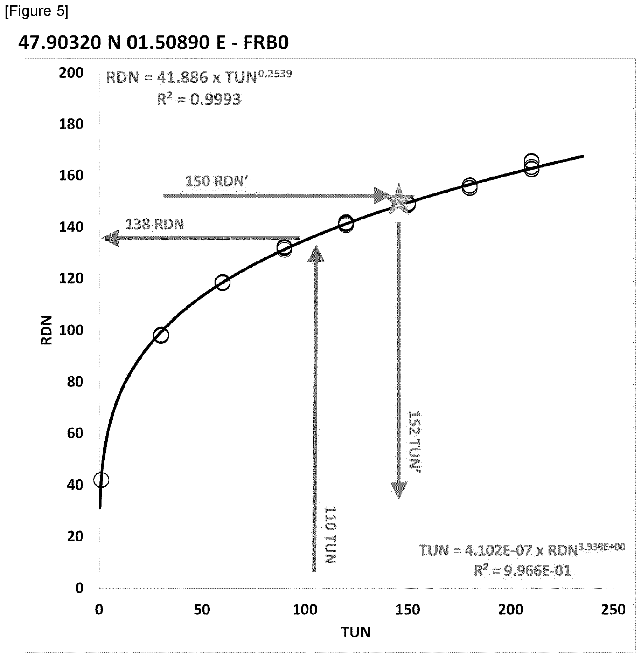

**Figure 5** : Exemple 1 - FRB0 : La météo et les cumuls thermo-pluviométriques modifient les objectifs de rendements azoté, RDN, et donc le taux de fertilisation azotée, TUN, qui lui correspond. Les courbes de réponses à l'azote permettent cet ajustement dynamique de TUN, dès la sortie d'hiver s'il le faut, en précisant cette évolution de TUN → TUN'. Par exemple ici, une dose prévisionnelle souhaitée de 110 kg-$N_{fertilisan}$/ha correspond initialement à un objectif de RDN durable de 138 kg-$N_{grain}$/ha. Or, RDN sera le plus souvent révisé en cours de campagne, par exemple ici à RDN' = 150. À l'aide de cette même courbe de réponse à l'azote, mais inversée de manière à prédire TUN' pour ce nouvel RDN', on actualise TUN → TUN' précisément à 152, dès la sortie d'hiver par exemple. Le rendement azoté constaté à ce TUN (étoile ; Bogard et al. 2010) est ici situé sur la courbe de réponse, indiquant que la pratique culturale est durable en l'état. Si cette pratique culturale est reproduite d'année en année, quitte à réviser TUN → TUN' le moment venu, la durabilité de la fertilisation raisonnée sera assurée.

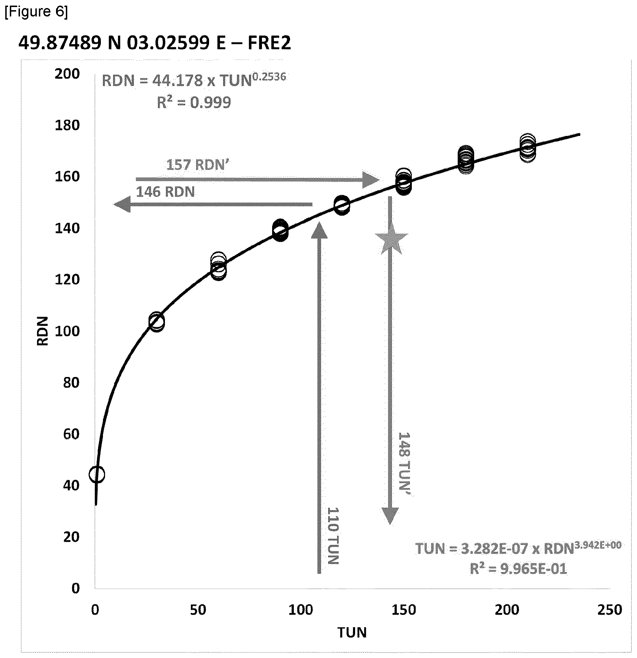

**Figure 6** : Exemple 2 - FRE2 : AgroNum™ est interopérable avec la prédiction des rendements (*yield forcasting,* angl.), voire avec la modulation intra-parcellaires des taux d'applications tels que pratiqués en agriculture de précision. Ici, le taux de fertilisation, TUN, initialement souhaité correspond à un objectif de rendement azoté durable, RDN, de 146 kg-$N_{grain}$/ha. Celui-ci évolue immanquablement selon la météorologie et les cumuls thermo-pluviométriques, par exemple ici à RDN = 157. On ajustera donc à l'aide de cette même courbe de réponse inversée le TUN' correspondant à 148 UN. Libre à l'agriculteur/trice de moduler les dernières fractions d'$N_{fertilisant}$. Le RDN constaté (étoile ; Bogard et al. 2010) est cependant inférieur à la courbe de réponse indiquant que la pratique culturale, en l'état, n'est pas durable et devra être modifiée. Par exemple, à ce TUN, il faudrait augmenter RDN à l'aide d'un biostimulant, ou en augmentant la densité de semis, ou encore en n'exportant plus, le cas échéant, les résidus de culture.

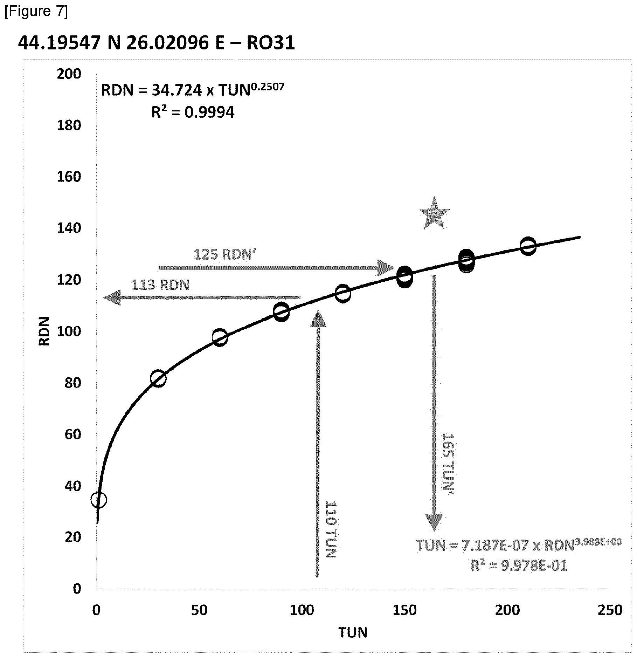

**Figure 7** : Exemple 3 - RO31 : Les courbes de réponses à l'azote fertilisant AgroNum™ servent à ajuster le taux de fertilisation-N, TUN, selon l'évolution de la météo et du potentiel de rendement en ce lieu. Elles sont spécifiques à la parcelle, et valable pour l'ensemble des grandes cultures non-Fabaceae. Ici, en Roumanie, un TUN initialement fixé à 110 donne durablement 113 kg-$N_{grain}$/ha. RDN → RDN' est cependant revu à la hausse selon les cumuls thermo-pluviométriques à de 125 ; ce nouvel objectif de rendement azoté requérait 165 kg-$N_{fertilisan}$/ha à titre de TUN'. Encore une fois, RDN' vaut ici pour *toutes* les grandes cultures non-Fabaceae à graines, peu importe leurs précédents et pratiques culturales. Le rendement azoté constaté (étoile : Madjar et al. 2018) à ce TUN est au-delà de la courbe de réponse à l'azote indiquant qu'à ce taux de fertilisation azoté, RDN épuise graduellement les réserves en azote de la matière organique. A ce TUN, il faudrait réduire RDN, en réduisant, par exemple, les densités de semis ou encore en faisant l'impasse sur l'utilisation d'un éventuel biostimulant.

**Validation de l'invention**

Dans l'ensemble, AgroNum™ augmente RDT, RDN et - surtout, RUN **(Tableau 2).** Or, il est bien connu que l'accumulation de la *matière organique du sol,* MOS, est liée à la quantité et la qualité des résidus de culture au sol, RCS, issus de ces rendements, mais aussi à la dynamique de la microflore du sol en présence d'azote minéral. L'augmentation de la susdite productivité est, elle, très opportune du fait d'écarts persistants entre rendements réalisables et constatés (*yield gaps,* Schils et al. 2018, Ma et al. 2016, Senapati et al. 2020). AgroNum™ sied donc bien à l'agriculture durable en favorisant une productivité socio-économiquement recherchée (Brundtland et al. 1987), tout en minimisant la quantité d'azote réactif abandonné à l'environnement.

L'émission d'$N_2O$ est, elle, surtout le fait de RUN faibles et des reliquats d'azote post-récolte qui en résultent, plutôt que de TUN plus ou moins élevés (Ruser et al. 2001, Marie et al. 2015, Viana-Pires et al. 2015). En agriculture durable, il faut donc augmenter RUN plutôt que nécessairement réduire TUN. La dégradation de la matière organique du sol est, elle, surtout due à une attaque microbienne lorsque les teneurs en azote minéral de la solution du sol sont élevées, par exemple lorsque les susdits RUN trop faibles augment les reliquats post-récoltes d'azote minéral (Mulvaney et al.

2009, Khan et al. 2007). Encore une fois, augmenter RUN est synonyme de conservation des sols et de durabilité.

Il est aussi connu que la teneur en azote des résidus de culture augmente avec taux de fertilisation azotée, quitte à réduire progressivement RUN (Effah et al. 2022, Rutkowska et al. 2016). Or, cela va augmenter le degré d'humification desdits résidus de culture, humification très liée à une certaine stœchiométrie carbon/azote/phosphore de la matière organique du sol des résidus de culture qui l'intègrent progressivement (Kirkby et al. 2016/bis, Janssen et al. 1996, Nicolardot et al. 2001, Cotrufo et al. 2013, Richardson et al. 2014). Enfin, rappelons que l'accumulation de la matière organique du sol est tributaire des rendements agronomiques et des quantités de résidus de culture ainsi produites (Omara et al. 2019/bis, Stella et al. 2019, Benjamin et al. 2016).

| annee | CLT | RCS | TUN | RUN | a AgroNum | RDN |
|---|---|---|---|---|---|---|
| 2014 | AVN | BTH | 120 | 0.7318 | 1.133 | **105.94** |
| 2015 | AVN | BTH | 120 | 0.7327 | 1.132 | **106.00** |
| 2016 | AVN | BTH | 120 | 0.7316 | 1.133 | **105.93** |
| 2017 | AVN | BTH | 120 | 0.7307 | 1.134 | **105.86** |
| 2018 | AVN | BTH | 120 | 0.7309 | 1.133 | **105.87** |
| 2019 | AVN | BTH | 120 | 0.7317 | 1.133 | **105.93** |
| 2020 | AVN | BTH | 120 | 0.7311 | 1.133 | **105.89** |
| 2014 | BDH | BTH | 120 | 0.7304 | 1.134 | **105.83** |
| 2015 | BDH | BTH | 120 | 0.7341 | 1.131 | **106.11** |
| 2016 | BDH | BTH | 120 | 0.7323 | 1.132 | **105.97** |
| 2017 | BDH | BTH | 120 | 0.7316 | 1.133 | **105.93** |
| 2018 | BDH | BTH | 120 | 0.7306 | 1.134 | **105.85** |
| 2019 | BDH | BTH | 120 | 0.7310 | 1.133 | **105.88** |
| 2020 | BDH | BTH | 120 | 0.7302 | 1.134 | **105.82** |
| 2014 | BTH | BTH | 120 | 0.7334 | 1.132 | **106.05** |
| 2015 | BTH | BTH | 120 | 0.7329 | 1.132 | **106.02** |
| 2016 | BTH | BTH | 120 | 0.7331 | 1.132 | **106.04** |
| 2017 | BTH | BTH | 120 | 0.7312 | 1.133 | **105.89** |
| 2018 | BTH | BTH | 120 | 0.7307 | 1.134 | **105.86** |
| 2019 | BTH | BTH | 120 | 0.7306 | 1.134 | **105.85** |
| 2020 | BTH | BTH | 120 | 0.7305 | 1.134 | **105.85** |
| 2014 | BTP | BTH | 120 | 0.7311 | 1.133 | **105.89** |
| 2015 | BTP | BTH | 120 | 0.7324 | 1.132 | **105.98** |
| 2016 | BTP | BTH | 120 | 0.7321 | 1.133 | **105.96** |
| 2017 | BTP | BTH | 120 | 0.7313 | 1.133 | **105.90** |
| 2018 | BTP | BTH | 120 | 0.7297 | 1.134 | **105.79** |
| 2019 | BTP | BTH | 120 | 0.7313 | 1.133 | **105.90** |
| 2020 | BTP | BTH | 120 | 0.7309 | 1.133 | **105.87** |
| 2014 | CLZ | BTH | 120 | 0.7328 | 1.132 | **106.01** |
| 2015 | CLZ | BTH | 120 | 0.7322 | 1.132 | **105.97** |
| 2016 | CLZ | BTH | 120 | 0.7330 | 1.132 | **106.02** |
| 2017 | CLZ | BTH | 120 | 0.7314 | 1.133 | **105.91** |
| 2018 | CLZ | BTH | 120 | 0.7311 | 1.133 | **105.89** |
| 2019 | CLZ | BTH | 120 | 0.7315 | 1.133 | **105.92** |

(suite)

| annee | CLT | RCS | TUN | RUN | a AgroNum | RDN |
|---|---|---|---|---|---|---|
| 2020 | CLZ | BTH | 120 | 0.7321 | 1.133 | **105.96** |
| 2014 | ORH | BTH | 120 | 0.7334 | 1.132 | **106.05** |
| 2015 | ORH | BTH | 120 | 0.7338 | 1.131 | **106.08** |
| 2016 | ORH | BTH | 120 | 0.7338 | 1.131 | **106.08** |
| 2017 | ORH | BTH | 120 | 0.7316 | 1.133 | **105.92** |
| 2018 | ORH | BTH | 120 | 0.7306 | 1.134 | **105.85** |
| 2019 | ORH | BTH | 120 | 0.7317 | 1.133 | **105.93** |
| 2020 | ORH | BTH | 120 | 0.7320 | 1.133 | **105.95** |
| 2014 | ORP | BTH | 120 | 0.7321 | 1.132 | **105.96** |
| 2015 | ORP | BTH | 120 | 0.7333 | 1.132 | **106.05** |
| 2016 | ORP | BTH | 120 | 0.7331 | 1.132 | **106.03** |
| 2017 | ORP | BTH | 120 | 0.7323 | 1.132 | **105,97** |
| 2018 | ORP | BTH | 120 | 0.7316 | 1.133 | **105.92** |
| 2019 | ORP | BTH | 120 | 0.7315 | 1.133 | **105.92** |
| 2020 | ORP | BTH | 120 | 0.7319 | 1.133 | **105.95** |
| 2014 | SCL | BTH | 120 | 0.7319 | 1.133 | **105.94** |
| 2015 | SCL | BTH | 120 | 0.7323 | 1.132 | **105.97** |
| 2016 | SCL | BTH | 120 | 0.7324 | 1.132 | **105.98** |
| 2017 | SCL | BTH | 120 | 0.7316 | 1.133 | **105.93** |
| 2018 | SCL | BTH | 120 | 0.7308 | 1.133 | **105.87** |
| 2019 | SCL | BTH | 120 | 0.7322 | 1.132 | **105.97** |
| 2020 | SCL | BTH | 120 | 0.7323 | 1.132 | **105.97** |
| 2014 | TRC | BTH | 120 | 0.7303 | 1.134 | **105.83** |
| 2015 | TRC | BTH | 120 | 0.7300 | 1.134 | **105.80** |
| 2016 | TRC | BTH | 120 | 0.7304 | 1.134 | **105.84** |
| 2017 | TRC | BTH | 120 | 0.7324 | 1.132 | **105.98** |
| 2018 | TRC | BTH | 120 | 0.7306 | 1.134 | **105.85** |
| 2019 | TRC | BTH | 120 | 0.7316 | 1.133 | **105,92** |
| 2020 | TRC | BTH | 120 | 0.7324 | 1.132 | **105.98** |
| 2014 | TSL | BTH | 120 | 0.7352 | 1.130 | **106.18** |
| 2015 | TSL | BTH | 120 | 0.7352 | 1.130 | **106.19** |
| 2016 | TSL | BTH | 120 | 0.7353 | 1.130 | **106.19** |
| 2017 | TSL | BTH | 120 | 0.7331 | 1.132 | **106.03** |
| 2018 | TSL | BTH | 120 | 0.7325 | 1.132 | **105.99** |
| 2019 | TSL | BTH | 120 | 0.7336 | 1.131 | **106.07** |
| 2020 | TSL | BTH | 120 | 0.7335 | 1.131 | **106.06** |
| 2014 | ZEA | BTH | 120 | 0.7320 | 1.133 | **105.96** |
| 2015 | ZEA | BTH | 120 | 0.7321 | 1.132 | **105.96** |
| 2016 | ZEA | BTH | 120 | 0.7334 | 1.132 | **106.05** |

(suite)

| annee | CLT | RCS | TUN | RUN | a AgroNum | RDN |
|---|---|---|---|---|---|---|
| 2017 | ZEA | BTH | 120 | 0.7320 | 1.133 | **105.95** |
| 2018 | ZEA | BTH | 120 | 0.7317 | 1.133 | **105.93** |
| 2019 | ZEA | BTH | 120 | 0.7322 | 1.132 | **105.97** |
| 2020 | ZEA | BTH | 120 | 0.7324 | 1.132 | **105.98** |

En agriculture durable, il faut donc veiller à augmenter RUN afin d'éviter une trop importante attaque de la MOS par les microorganismes du sol friands d'azote réactif, d'une part, et d'autre part, en situations de hauts rendements en grain et RCS, favoriser l'enrichissement en azote des RCS afin d'en assurer l'humification, quitte à minorer un peu l'augmentation de RUN. AgroNum™ réalise ce délicat équilibre en éliminant les itinéraires techniques et modalités associés à des RUN soit trop faibles, soit trop élevés (cf. EP22152629.6). Il en résulte un algorithme capable de sélectionner les pratiques culturales les plus durables en établissant l'objectif RDN selon le TUN souhaité.

Enfin, la durabilité des pratiques culturales au sens de la présente invention est aussi illustrée par les RDN à TUN $\approx 0$ proposés par AgroNum™, objectifs de RDN comparables aux rendements azotés sans apport d'azote fertilisant stables sur le long terme (Miao et al. 2011, Kubat et al. 2003, etc.). Ces niveaux de rendements stables à long terme sans apport d'$N_{fertilisant}$ sont tributaires de l'activité *azotobactérienne* du sol. Trop souvent, les rendements azotés, RDN, à TUN $\approx 0$ proposés en fertilisation raisonnée à titre d'estimations globales de fournitures d'azote par le sol (P0 ; Comifer 2017) sont trop élevés pour être durables, n'étant que l'arrière-effet de TUN bien supérieurs à 0 kg-$N_{fertilisant}$/ha. Les RDN à TUN $\approx 0$ proposés par AgroNum™ au Figures 5, 6 & 7 sont beaucoup plus raisonnables, et donc durables.

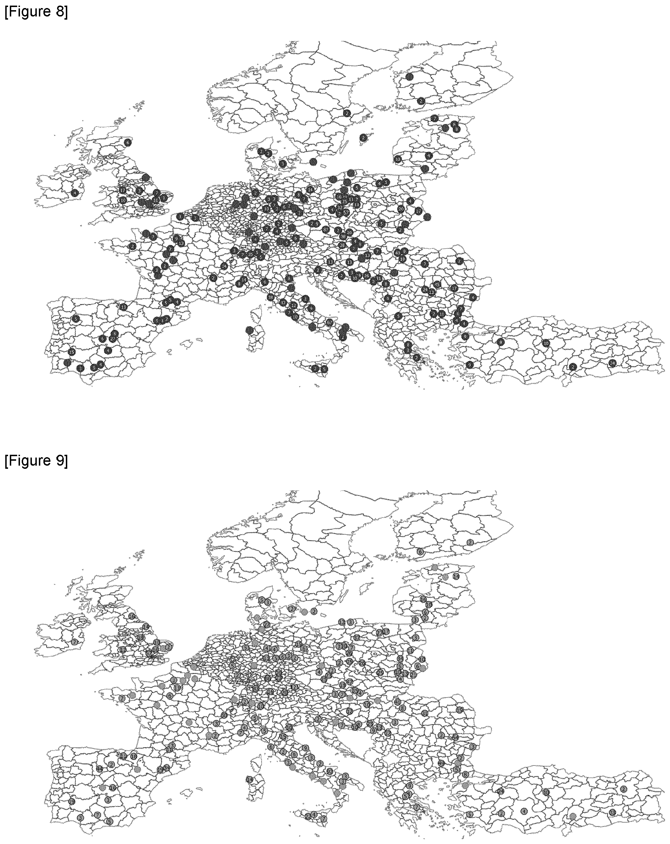

Mieux. Des 16000 modalités compilées dans la base de données AgroNum™, celles les plus conforment aux préconisations d'AgroNum ont été comparées par méta-analyses (Makowski et al. 2018) aux habituelles *références environnementales.* Les quelques 2342 modalités aux rendements unitaires, RUN, comparables aux références durables proposées par AgroNum™ **(Figure 8** : Géolocalisation des parcelles avec rendements et pratiques culturales conformes aux préconisations AgroNum™ au sens de la présente invention, rRSQ) ont été comparées aux quelques 2000 modalités aux RUN plus proches des, plus similaires aux, *références environnementales* provenant de recensements et statistiques agricoles **(Figure 9** : Géolocalisation des parcelles avec rendements et pratiques culturales plus en ligne avec les moyennes pluriannuelles cantonales, départementales ou régionales, rASQ).

Ces deux populations de rendements & pratiques culturales, rRSQ & rASQ, sont statistiquement très distinctes. À travers l'Europe (Figures 8 & 9), on observe sur les quelques 2000 parcelles avec des pratiques culturales aux rendements en grain (RDT), en azote (RDN) et par kg-$N_{fertilisant}$/hectare (RUN) proches des objectifs de RDN *durables* proposés par AgroNum™ **(Tableau 2)** ;

- une augmentation des rendements, RDT, produisant plus de résidus de culture au sol contribuant à une augmentation de la matière organique du sol.
- une augmentation des rendements azotés, RDN, par hectare ne s'agissant pas de simples augmentations au détriment des teneurs en protéines.
- une augmentation des rendements unitaires, RUN, et une meilleure utilisation de l'$N_{fertilisant}$ favorable à la conservation de la MOS et moins de reliquats-N et d'$N_2O$.

Quelques indices de la dynamique de la matière organique du sol pour ces deux sous-ensembles, rRSQ & rASQ, de parcelles agricoles comportant diverses pratiques culturales sont rapportés aux **Tableaux 3 & 4.** Encore une fois, il semble que plus de rendements et de biomasse et moins de reliquats d'azote à l'automne grâce à une meilleur utilisation de l'azote limite la dégradation de la matière organique du sol sur les parcelles avec des RDN plutôt similaires aux références AgroNum™, rRSQ.

**Tableau 2** : Rendements moyens de grandes cultures céréalières, maïs-grain, colza et tournesol de parcelles aux rendements unitaires, RUN, conformes ( :: ) à ceux préconisés par AgroNum™ - rRSQ, par rapport à celles avec des rendements similaires aux habituelles moyennes pluriannuelles, ou références environnementales - rASQ.

| Variable | unités/description | :: rASQ | :: rRSQ | rRSQ/rASQ | t.test |
|---|---|---|---|---|---|
| PRT | %N_grain | 2.14 | 2.215 | **104%** | 0% *** |
| TUN | kg-N_fertilisant/ha | 128 | 135 | **105%** | 0% *** |
| RDT | quintaux(qx)/ha | 49.56 | 61.97 | **125%** | 0% *** |
| RDN | kg-N_grain/ha | 99 | 127 | **128%** | 0% *** |
| RUN | N_grain/N_fertilisant | 0.667 | 0.986 | **148%** | 0% *** |
| run | N_grain/N_fertilisant | 0.741 | 0.907 | **122%** | 0% *** |

Le bienfait de cette plus grande efficacité agro-environnementale se traduit, pas nécessairement par l'augmentations des teneurs et stocks de matières organiques carbonées **(Tableau 3)** - les valeurs initiales de ces stocks étant inconnues.

**Tableau 3** : Teneurs et quantités de diverses formes de carbone organique en sols arables sur parcelles avec rendements conformes ( :: ) à ceux préconisés par AgroNum™ - rRSQ, par rapport à celles avec des rendements similaires aux habituelles moyennes pluriannuelles, ou références environnementales - rASQ.

| Variable | unités/description | :: rASQ | :: rRSQ | rRSQ/rASQ | t.test | Référence |
|---|---|---|---|---|---|---|
| soc_new | tonnes-C/ha | 46.3 | 48.1 | **104%** | 0% *** | Lugato et al. 2014a/b |
| Cerd_new | g-C/g-terre | 0.031 | 0.034 | **110%** | 2% * | Lugato et al. 2015 |
| SOCerd_new | tonnes-C/ha | 54.05 | 60.95 | **113%** | 0% *** | Lugato et al. 2015 |
| co0005 | % C_organic./00-05 cm | 3.42 | 3.76 | **110%** | 0% *** | Batjet et al. 2020 |
| co0515 | % C_organic./05-15 cm | 1.93 | 1.97 | **102%** | 11% [ns] | Batjet et al. 2020 |
| POM_g_kg_84 | g-$C_{POM}$/kg-terre | 6.1073 | 6.2133 | **102%** | 26% [ns] | Lugato et al. 2021 |

Ce sont plutôt les faibles niveaux de variables telles que les taux de dégradation, ou déclin, de la matière organique, les quotients respiratoires, $qO_2$, de la microflore du sol, la minéralisation de la matière organique, ou l'émanation de protoxyde d'azote, $N_2O$, caractéristique de microflores édaphiques « stressées » **(Tableau 4)** qu'apparait le bienfait agro-environnemental d'AgroNum™.

**Tableau 4** : Dynamique de la matière organique de sols arables, y compris sa conséquence sur l'émanation de protoxyde d'azote, sur parcelles sur parcelles avec rendements conformes ( :: ) à ceux préconisés par AgroNum™ - rRSQ, par rapport à celles avec des rendements similaires aux habituelles moyennes pluriannuelles, ou références environnementales - rASQ.

| Variable | unités/description | :: rASQ | :: rRSQ | rRSQ/rASQ | t.test | Référence |
|---|---|---|---|---|---|---|
| OM_decline | coeff. rég. partiel | 0.03075 | 0.02967 | **96%** | 15% [ns] | Orgiazzi et al. 2016 |
| dPOM_Mg_ha_84 | Mg/ha/année | -1.42 | -1.18 | **83%** | 0% *** | Lugato et al. 2021 |
| qO2_annual_mean | µL $O_2$/µg Cmic/hr | 2.45E-03 | 2.27E-03 | **92%** | 0% *** | Smith et al. 2021 |
| S_N (soil N_supply) | kg-N/ha/année | 50.24 | 45.76 | **91%** | 2% * | Lu et al. 2016 |
| N2O.ipcc_Wheat | kg-$N_{N2O}$/ha/année | 1.669 | 1.493 | **89%** | 1% ** | Tesfaye et al. 2021 |
| N2O.ipcc_Maize | kg-$N_{N2O}$/ha/année | 1.763 | 1.545 | **88%** | 0% *** | Tesfaye et al. 2021 |

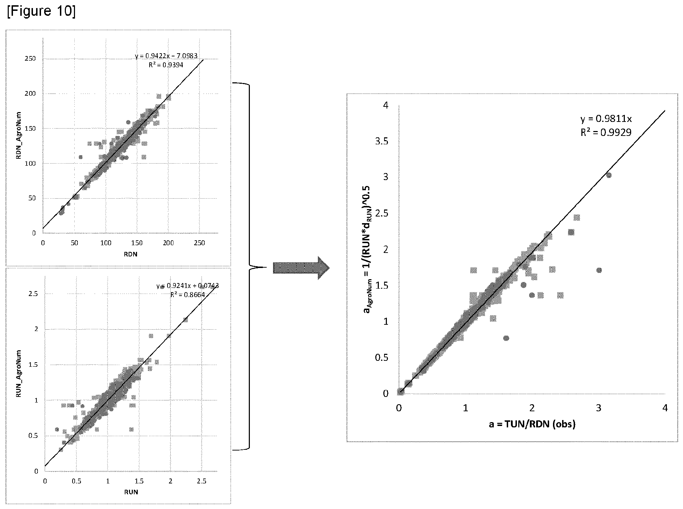

L'algorithme AgroNum™ a aussi été validé par une approche stochastique **(Figure 10).** Un sous-ensemble aléatoire de 15% des 2342 (351, •) *des valeurs d'*$a_{AgroNum}$, de pratiques culturales durables a bel et bien été prédit précisément à l'aide des 85% restant (1991, ■) ayant servis à calibrer le modèle. L'algorithme est composé de modélisations prédictives, dites parfois *d'intelligence artificielle,* déjà décrites dans EP20194102.8 et reprise dans EP22152629.6.

Notons plutôt que le concept, nouveau en fertilisation raisonnée, de *besoin unitaire de la pratique culture,* $a_{AgroNum}$. Ce concept décrit la quantité d'azote fertilisant nécessaire par unité de rendement azoté, RDN, mobilisé et exporté par le grain et caractéristique de la pratique culturale. La Figure 10 illustre aussi le lien qui existe ici entre RUN et RDN, et comment, ensemble, ils précisent $a_{AgroNum}$ et donc le calcul des doses prévisionnelles TUN et objectif de rendements RDN. Rappelons que le besoin unitaire de la pratique culturale est l'inverse du *rendement unitaire simple,* run = RDN/TUN, i.e. sans ajustement pour $d_{RUN}$, à savoir, encore une fois ;

$$a_{AgroNum} = \frac{1}{\sqrt{RUN \cdot d_{RUN}}}$$

Tel qu'indiqué ci-dessus, ce concept de besoin unitaire de la pratique culturale, $a_{AgroNum}$, met en lumière et facilite le rétro-calcul de séries de couples [RDN ↔ TUN] durables tel qu'exemplifié ici aux Figures 3, 4 & 5.

**Interopérabilité et ergonomie de l'invention - AgroNum™**

La présente invention est caractérisée par son interopérabilité avec les principales technologies en agriculture durable, à savoir ;

✓ le calcul précis des doses-prévisionnelles d'engrais azotés en fertilisation raisonnée à titre d'alternative à la méthode du bilan (Comifer 2017),

✓ l'ajustement dynamique intra-annuelle de ces doses-prévisionnelles en fonction de l'état de la culture en cours d'élaboration de son rendement azoté, et

✓ la modulation intra-parcellaire des doses d'engrais-N, de manière à apporter juste ce qu'il faut, là où il faut à différents endroits de la parcelle.

Le raisonnement, de la dispense, le fractionnement, l'application au champ et/ou le pilotage intra-saisonnier en fertilisation raisonnée desdits TUN prévisionnels, dN, durables sur les cultures qui reçoivent plusieurs fractions d'apports successifs d'azote y compris est *interopérable* et comprend avantageusement l'ajustement du dernier apport en prenant en compte les observations sur l'état de la culture à l'aide d'outils de pilotage permettant d'évaluer l'état de la nutrition azotée de la culture.

L'objectif de rendement azoté,RDN, est actualisable dynamiquement (cf. **Figures 4, 5, 6 & 7)** au fil du temps, intra-annuellement, selon la météorologie et/ou les cumuls thermiques et hydriques du lieu où est située la parcelle. Cela consiste à prédire dynamiquement en cours de saison les rendements, avantageusement azotés, RDN, de grandes-cultures non-Fabaceae, comportant le plus souvent une analyse bayésienne de la probabilité de réalisation dudit objectif de rendement en cours d'élaboration sur le lieu d'une parcelle agricole en particulier.

L'agriculture de précision, notamment par voie de modulation intra-parcellaire d'intrants - matières fertilisantes, pesticides, etc., est aussi interopérable avec l'invention. Ces approches qui doivent apporter « juste ce qu'il faut, là où il faut, quand il le faut » dénotent généralement des différentes zones à l'intérieure d'une même parcelle. Chaque zone recevra donc exactement la dose prévisionnelle, TUN, prescrite selon l'objectif de rendement en cette zone.

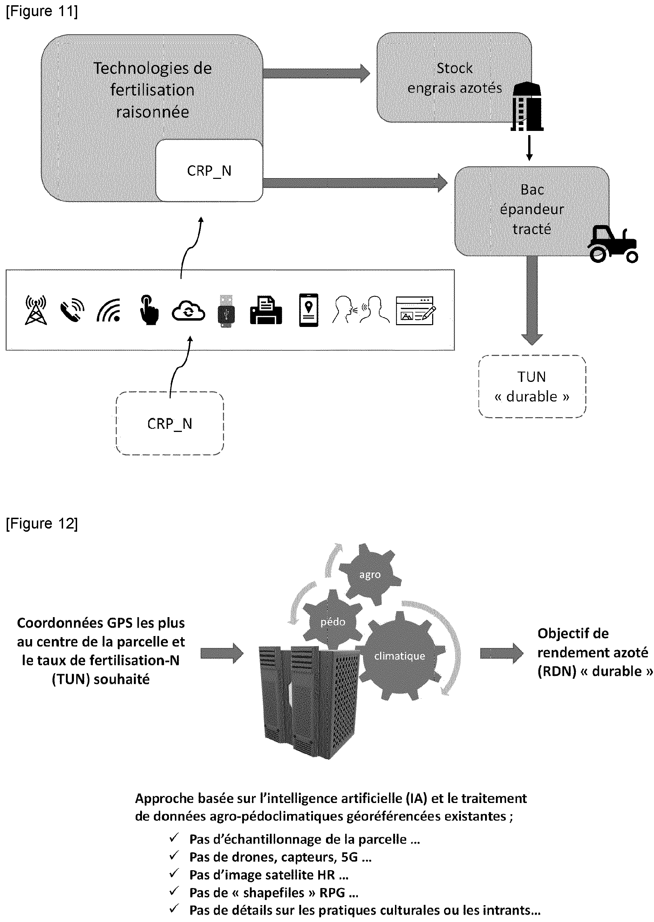

Cette *interopérabilité* est schématisée à la **Figure 11.** La courbe de réponse à l'azote, disons CRP_N, récapitule à titre de doses prévisionnelles les différents taux de fertilisation azotée. Ces TUN peuvent maintenant être fractionnés en plus apports appliqués au fil du temps selon le développement de la culture et son état *azoto-nutritionnel* (sic). Il est parfois avantageux, dans le cadre d'une agriculture de précision, de moduler *spatio-temporellement* (sic) ces apports à l'aide de cartes de modulation et/ou de prévisions dites *baysiennes* (sic). Dans tous les cas, il y a interopérabilité entre la courbe de réponse CRP_N et l'une ou l'autre des susdites technologies de communications, à savoir des réseaux cellulaire, wifi, des cartes mémoires, *clouds* (sic, angl.), clefs USB insérables, ou encore plus par téléphone ou facsimilée, ou même par simples activations manuelle, vocale ou écrite s'il le faut.

Enfin, cette interopérabilité dépend de l'ergonomie et la simplicité d'utilisation schématisés à la **Figure 12.** Par exemple ici, via la page « Votre parcelle » de www.polyor.fr l'utilisateur n'a qu'à indiquer les coordonnées GPS (eg. CRS ; WGS84) les plus au centre de la parcelle, ainsi que le taux de fertilisation azoté, TUN, qu'il/elle souhaite valoriser. L'objectif de rendement azoté, RDN, durable - applicable à toutes les grandes cultures à graines non-*Fabaceae*, est par la suite calculé et communiqué directement à l'agriculteur/rice réalisant ainsi de facto la susdite interopérabilité. Il est comme de raison aussi possible, au contraire, de renseigner un quelconque RDN, et de rétro-calculer un TUN durable lui correspondant ; cf. Figures 4, 5, 6 & 7 ci-haut.

**SIGLES ET DÉFINITIONS**

*AgroNum*™ : (cf. www.polyor.fr) approche numérique, ou algorithmique, pour la fertilisation raisonnée uniquement basée sur l'estimation précise d'un objectif de rendement azoté durable de référence, rRDN, pour une quelconque parcelle agricole. En s'appuyant sur la notion de courbe de réponse à la fertilisation azotée (infra), AgroNum™ prédit par voie d'intelligence artificielle rRDN d'une grande culture non-*Fabaceae* à graine uniquement sur la base des coordonnées GPS les plus au centre de la parcelle, peu importe le type de culture, de précédent culturale, résidus de culture au sol, ou mode de fertilisation azotée. AgroNum™ est donc en ce sens générique, une seule courbe de réponse s'appliquant à l'ensemble des situations et types de grandes culture non-*Fabaceae* à graines récoltables.

*ASQ* : moyennes pluriannuelles ajustées des rendements des susdites grandes cultures d'unités cartographiques régionales ou locales telles qu'un département français ou encore un NUTS2 ou NUTS3 (nomenclature des unités territoriales statistiques) européens. ASQ consiste en un ajustement desdits rendements par un indice de la productivité inhérente de la parcelle, iSQ, par exemple ici selon Toth et al. 2013. ASQ sert ici de *références environnementales* auxquelles comparer un rendement parcellaire, RSQ (infra). Voir aussi, infra, QSQ.

*Besoin unitaire de la pratique culturale* ($a_{AgroNum}$) : kg-$N_{fertilisant}$ par kg-$N_{grain}$ récoltable par hectare. Cette notion est inédite. Les valeurs d'$a_{AgroNum}$ sont sensiblement plus faible, de l'ordre de 1,00, que celles des besoins unitaires variétaux, alias $a_{Arvalis}$, de l'ordre de 3,00.

*Courbe de réponse* (des rendements à l'afertilisant) : fonction mathématique décrivant l'augmentation des rendements, azotés - RDN, notamment, de la plupart des grandes cultures non-*Fabaceae*, alias non-légumineuses, selon l'augmentation des apports d'$N_{fertilisant}$ à titre d'engrais et matières fertilisantes.

*Dose prévisionnelle d'engrais-azotés :* taux de fertilisation azotée, kg-$N_{fertilisant}$/hectare, établi avant le premier apport sur la base d'un calcul, bilan ou tout autre méthode cherchant à établir un équilibre entre les besoins de la culture et de tels apports d'azote fertilisant, et généralement fractionné et appliqué séquentiellement de manière à caller encore plus ces apports avec les besoins immédiats de la culture en cours développement.

*Grande-culture non-Fabaceae* : grandes cultures agronomiques à graines récoltables y compris les céréales d'hiver et de printemps (blés tendre et dur, avoine, triticale, seigle et orges), colza, tournesol et maïs-grain, à l'exclusion des cultures *Fabaceae* généralement en symbioses avec des bactéries fixatrices d'azote diatomique, $N_2$.

*Interopérabilité :* capacité que possède un produit ou un système, dont les interfaces sont connues, à fonctionner avec d'autres produits ou systèmes existants ou futurs et ce sans restriction d'accès ou de mise en œuvre. Il convient de distinguer *interopérabilité* et *compatibilité*. (Source : Wikipédia).

*Intrant* : produits et services à titre d'agrofournitures contribuant aux rendements des susdites grandes cultures non-*Fabaceae*, en particulier engrais N, P, K & S, engrais foliaires, régulateurs de croissance, produits phytosanitaires, semences améliorées, etc., ainsi que des biostimulants tels que la fertilisation *azotobactérienne* (Claude et Fillion 2004), mais aussi des technologies d'agriculture de précision telles que les cartes de modulation intra-parcellaire et les méthodes prédiction intra-annuelles des rendements.

*Itinéraire technique :* dans le cadre d'une *pratique culturale,* la combinaison de divers intrants pour une campagne donnée selon les connaissances et l'art de l'agriculteur pour une parcelle en particulier respectant nécessairement les règles, normes et directives applicables. Il convient de discerner entre *pratique culturale* et *itinéraire technique,* ce dernier n'étant qu'une déclinaison de la pratique culturale.

*Pratique culturale* : heuristique dictant comment composer l'*itinéraire technique* à partir d'une panoplie, une palette, *d'intrants.* La pratique culturale sera modifiée, (i) si un nouvel intrant en replace un ancien, soit (ii) si ladite heuristique évolue et amène un changement des règles de composition des intrants, ou ditplus simplement, des pratiques culturales.

*Précédent cultural:* cultures agronomiques, y compris prairies, jachères et cultures *Fabaceae*, récoltées avant l'implantation des susdites grandes cultures non-*Fabaceae*.

QSQ : notion similaire à ASQ (supra) mais constitué de « moyennes de moyennes » pluriannuelles *glissantes (moving averages,* angl.), le plus souvent sur 5 années consécutives. Les traditionnels objectifs de rendements (Comifer 2017) équivalent souvent à de telles moyennes quinquennales, Q, d'une même culture pour une quelconque exploitation, îlot, lieu ou parcelle. QSQ fait donc ici office d'objectif de rendement au sens habituel, bien qu'a priori pas nécessairement durable.

*Rendement azoté* (RDN ; kg-$N_{grain}$/hectare) : quantité d'azote contenue par le rendement en grains exportable (*offtake,* angl.) à la récolte. Il a aussi été question de *rendement protéique* puisque la teneur en protéine est très liée à la teneur en azote des grains céréaliers ; cette relation étant moins serrée avec le colza et le tournesol, mieux vaut retenir plus généralement la notion de rendement azoté, RDN.

*Rendement unitaire* (RUN ; kg-$N_{grain}$/kg-$N_{fertilisant}$) : rendement azoté, RDN, par rapport au *taux de fertilisation azotée,* TUN, ajusté par un indice standardisé décrivant la décroissance du rendement unitaire *simple,* run, selon l'augmentation de TUN de manière à comparer des itinéraires techniques comportant différents taux de fertilisation azotée, TUN. Formellement, RUN = $run^2/d_{run}$ lorsque run est le rendement unitaire *brut, ou simple,* avant correction en

fonction de $d_{run}$ = [$a$ - TUN$^{-b}$], les coefficients $a$ et $b$ provenant de relations empiriques décrivant la décroissance de run avec l'augmentation de TUN exprimé en kg-N$_{fertilisant}$/hectare), et avantageuse ici à titre d'exemple lorsque $a$ est approximativement égale à 1400 et $b$ à 1,50.

*Rendement unitaire simple* (run ; kg-N$_{grain}$/kg-N$_{fertilisant}$) : RDN par unité de TUN, soit formellement et simplement, run = RDN/TUN.

*Résidus de culture au sol,* RCS : parties aériennes des cultures non-récoltées et laissées au sol post-récolte. Trop souvent, une partie importante, 50% par exemple, de ces RCS est exporte hors de la parcelle.

*RSQ* : cas particulier de TSQ lorsque eTRT ≡ 0 au sens des Équations 1, 2 et, surtout, 3, c'est-à-dire en absence de modifications de l'actuelle pratique culturale lors d'un galop d'essai sans nouveaux intrants à l'essai sur la parcelle. Ce faisant, c'est bel et bien la durabilité de l'actuelle pratique culturale qu'on évaluer en comparant RSQ aux rendements de référence durable, rRSQ, généré par AgroNum™ à titre de de parangon (*benchmark,* angl.).

*Taux de fertilisation azotée,* TUN (kg-N$_{fertilisant}$/ha) : azote fertilisant apporté par hectare peu importe la forme - organique, minérale, organo-minérale, composée, synthétique ou « naturelle » - dans la mesure où la quantité équivalente d'azote réactive, i.e. parfaitement soluble dans la solution du sol, est précise et clairement indiqué.

TSQ : rendements, soit en grains, RDT, en azote récolté dans les grains, RDN, ou par kg-N$_{fertilisant}$/hectare, RUN, ajustés de la parcelle agricole sur laquelle un nouvel intrant modifiant la *pratique culturale* est à l'essai. TSQ = [rendements / iSQ], iSQ étant ici un quelconque indice de la productivité inhérente de la parcelle, par exemple ici selon Toth et al. 2013. TSQ, et donc RSQ (supra), sont des notions complémentaires à ASQ & QSQ (supra) au sein des Équations 1, 2 & 3.

## Références

1) AppEEARS Team. 2020. Application for Extracting and Exploring Analysis Ready Samples (AppEEARS). Ver. 2.37.1. NASA EOSDIS Land Processes Distributed Active Archive Center (LP DAAC), USGS/Earth Resources Observation and Science (EROS) Center, Sioux Falls, South Dakota, USA. https://lpdaacsvc.cr.usgs.gov/appeears / cf. MODIS Land Products(Terra, Aqua, & Combined) / cf. S-NPP NASA VIIRS Land Products / https://lpdaac.usgs.gov/product_search/?collections=S-NPP+VIIRS&view=list / cf. SMAP Products / http://nsidc.org/data/smap/smap-data.html

2) Batjes et al. 2020. Standardised soil profile data to support global mapping and modelling (WoSIS snapshot 2019). Earth Syst. Sci. Data, 12, 299-320

3) Benjamin et al. 2010. Crop Management Effects on Crop Residue Production and Changes in Soil Organic Carbon in the Central Great Plains. Agron. J. 102(3) : 990-997

4) Bogard et al. 2010. Deviation from the grain protein concentration-grain yield negative relationship is highly correlated to post-anthesis N uptake in winter wheat. J. Exp. Bot. 61(15) : 4303-4312

5) Brundtland, G. 1987. Report of the World Commission on Environment and Development: Our Common Future. United Nations General Assembly document A/42/427.

6) Claude et Fillion 2004. Effet de l'apport d'un inoculum bactérien aux résidus de culture de maïs-grain au sol sur le rendement et la qualité de blés d'hiver panifiables en France. Agrosolutions 15(1):23-29

7) Comifer 2017. Guide de la fertilisation raisonnée - 2ième éd. (dir, Bruno Colomb). Éds France Agricole.

8) Cotrufo et al. 2013. The Microbial Efficiency-Matrix Stabilization (MEMS) framework integrates plant litter decomposition with soil organic matter stabilization: do labile plant inputs form stable soil organic matter? Global Change Biology (2013) 19, 988-995, doi: 10.1111/gcb.12113

9) Effah et al. 2022. Post-anthesis Relationships Between Nitrogen Isotope Discrimination and Yield of Spring Wheat Under Different Nitrogen Levels. Front. Plant Sci. 13:859655. doi: 10.3389/fpls.2022.859655

10) ESDAC 2019. European Soil Data Centre, ESDAC, esdac.jrc.ec.europa.eu, European Commission, JRC

11) Friedman et al. 2001. Greedy function approximation - a gradient boosting machine. Annals of Statistics 29(5) : 1189-1232.

12) Janssen et al. 1996. Nitrogen mineralization in relation to C:N ratio and decomposability of organic materials. Plant and Soil 181: 39-45, 1996. 39

13) Khan et al. 2007. The Myth of Nitrogen Fertilization for Soil Carbon Sequestration. J. Environ. Qual. 36:1821-1832 / doi:10.2134/jeq2007.0099

14) Kirkby et al. 2016 bis. Accurate measurement of resistant soil organic matter and its stoichiometry. European Journal of Soil Science, 67, 695-705

15) Kirkby et al. 2016. Inorganic Nutrients Increase Humification Efficiency and C-Sequestration in an Annually Cropped Soil. PLoS ONE 11(5): e0153698.

16) Kubat et al. 2003. Dry matter yields, nitrogen uptake and efficiency of nitrogen fertilization in long term experiments in Prague. Plant Soil Environ. 49 (8) : 337-345

17) Lu et al. 2016. Half-degree gridded nitrogen and phosphorus fertilizer use for global agriculture production during 1900-2013. PANGAEA, https://doi.org/10.1594/PANGAEA.863323, / *Supplement to:* Global nitrogen and phosphorus fertilizer use for agriculture production in the past half century: shifted hot spots and nutrient imbalance. Earth System Science Data, 9(1), 181-192

18) Lugato et al. 2015. Potential carbon sequestration of European arable soils estimated by modelling a comprehensive set of management practices. Global Change Biology 20: 3557-3567

19) Lugato et al. 2014. A new baseline of organic carbon stock in European agricultural soils using a modelling approach. Global Change Biology (2014) 20, 313-326, doi: 10.1111/gcb.12292

20) Lugato et al. 2015. Potential carbon sequestration of European arable soils estimated by modelling a comprehensive set of management practices. Global Change Biol. 20: 3557-3567

21) Lugato et al. 2016. Quantifying the erosion effect on current carbon budget of European agricultural soils at high spatial resolution. Global Change Biology (2016) 22, 1976-1984, doi: 10.1111/gcb.13198

22) Lugato et al. 2017. Complementing the topsoil information of the Land Use/Land Cover Area Frame Survey (LUCAS) with modelled N2O emissions. PLoS ONE 12(4): e0176111

23) Lugato et al. 2020. Maximising climate mitigation potential by carbon and radiative agricultural land management with cover crops.Environ. Res. Lett. 15 094075

24) Lugato et al. 2021. Different climate sensitivity of particulate and mineral-associated soil organic matter. Nature Geoscience / https://doi.org/10.1038/s41561-021-00744-x

25) Ma et al. 2016. Yield gap of winter wheat in Europe and sensitivity of potential yield to climate factors. Climate Research 67:179-190.

26) Madjar et al. 2018. Improve of grain yield and quality of winter wheat by nitrogen. Agronomy 61: 2285-5785.

27) Makowski et al. 2018. De l'analyse des réseaux expérimentaux à la méta-analyse : méthodes et applications avec le logiciel R pour les sciences agronomique et environnementales. Eds. Quae78026, Versailles, France.

28) Marie et al. 2015. Nitrous oxide emissions and nitrate leaching in an organic and a conventional cropping system (Seine basin, France). Agriculture, Ecosystems and Environment 213 (2015) 131-141

29) Miao et al. 2010. Long-term experiments for sustainable nutrient management in China. Agron. Sustain. Dev. 31:397-414

30) Mulvaney et al. 2009. Synthetic Nitrogen Fertilizers Deplete Soil Nitrogen: A Global Dilemma for Sustainable Cereal Production. J. Environ. Qual. 38:2295-2314 (2009). doi:10.2134/jeq2008.0527

31) Myneni, R., Knyazikhin, Y., Park, T. (2015). LAI - MOD15A2H MODIS/Terra Leaf Area Index/FPAR 8-Day L4 Global 500m SIN Grid V006. NASA EOSDIS Land Processes DAAC. Accessed 2020-04-16 from https://doi.org/10.5067/MODIS/MOD15A2H.006. Accessed April 16, 2020.

32) Nicolardot et al. 2001. Simulation of C and N mineralisation during crop residue decomposition: A simple dynamic model based on the C:N ratio of the residues. Plant and Soil 228: 83-103

33) Omara et al. 2019. Influence of No-Tillage on Soil Organic Carbon, Total Soil Nitrogen, and Winter Wheat (Triticum aestivum L.) Grain Yield. International Journal of Agronomy Volume 2019, Article ID 9632969, 9 pages / https://doi.org/10.1155/2019/9632969

34) Omara et al. 2020. Variability in Winter Wheat (Triticumaestivum L.) Grain Yield Response to Nitrogen Fertilization in Long-Term Experiments, Communications in Soil Science and Plant Analysis, DOI: 10.1080/00103624.2019.1709489

35) Orgiazzi et al. 2016. A knowledge-based approach to estimating the magnitude and spatial patterns of potential threats to soil biodiversity. Science Total Environment 545-546: 11-20

36) Panagos P, Van Liedekerke M., Jones A., Montanarella L. 2012. European Soil Data Centre: Response to European policy support & public data requirements. Land Use Policy 29(2):329-338

37) Pires et al. 2015. Nitrogen-Use Efficiency, Nitrous Oxide Emissions, and Cereal Production in Brazil: Current Trends and Forecasts. PLoS ONE 10(8): e0135234. doi:10.1371/journal.pone.0135234

38) Plaza-Bonilla et al. 2017. Innovative cropping systems to reduce N inputs and maintain wheatyields by inserting grain legumes and cover crops in southwesternFrance. Europ. J. Agronomy 82 : 331-341

39) Prokhorenkova et al. 2019. CatBoost: unbiased boosting with categorical features. In - arXiv:1706.09516v5 [cs.LG] 20 Jan 2019

40) Ravier et al. 2015. Les travaux des GREN, révélateurs de controverses autour de la méthode du bilan. 12èmes Rencontres de la fertilisation raisonnée, 18 & 19 novembre 2015, Lyon (France)

41) Ravier et al. 2016. Mismatch between a science-based decision tool & its use: The case of the balance-sheet method for nitrogen fertilization in France. NJAS - Wageningen J. Life Sci. 79 : 31

42) Ravier et al. 2017. Early nitrogen deficiencies favor high yield, grain protein content and N use efficiency in wheat. European J. Agron. 89 : 16-24

43) Reckling et al. 2021. Methods of yield stability analysis in long-term field experiments. A review. Agronomy for Sustainable Development 41: 27

44) Richardson et al. 2014. The inorganic nutrient cost of building soil carbon, Carbon Management, 5:3, 265-268, DOI: 10.1080/17583004.2014.923226

45) Ringeval et al. 2019. Insights on nitrogen and phosphorus co-limitation in global croplands from theoretical and modelling experiments. Biogeosciences https://doi.org/10.5194/bg-2019-298

46) Rodell et al. 2004. GLDAS - The Global Land Data Assimilation System, Bull. Amer. Meteor. Soc., 85(3): 381-394.

47) Ruser et al. 2001. Effect of crop-specific field management and N fertilization on N2O emissions from a fine-loamy soil. Nutrient Cycling in Agroecosystems 59: 177-191

48) Rutkowska et al. 2009. 15Nitrogen Study on Accumulation and Allocation of Nitrogen Applied at Anthesis on Top of Early Nitrogen Applications in Winter Wheat, Journal of Plant Nutrition, 32:8, 1306-1320

49) Schils et al. 2018. Cereal yield gaps across Europe. European Journal of Agronomy 101 (2018) 109-120

50) Senapati et al. 2020. Large genetic yield potential and genetic yield gap estimated for wheat in Europe. Global Food Security 24 : 100340.

51) Smith et al. 2021. Large-scale drivers of relationships between soil microbial properties and organic carbon across Europe. Global Ecol Biogeogr. 30:2070-2083.

52) Stella et al 2019. Estimating the contribution of crop residues to soil organic carbon conservation. Environ. Res. Lett. 14 094008

53) Teng et al. 2018. LPRM - README Document for LPRM Surface Soil Moisture Data Products. Goddard Earth Sciences Data and Information Services Center (GES DISC) http://disc.gsfc.nasa.gov NASA Goddard Space Flight Center Code 610.2 Greenbelt, MD 20771 USA

54) Tesfaye et al. 2021. Model comparison and quantification of nitrous oxide emission and mitigation potential from maize and wheat fields at a global scale. Sci. Total Environ. 782 - 146696

55) Tóth et al. 2013. Continental-scale assessment of provisioning soil functions in Europe. Ecological Processes 2013, 2: 32. - http://www.ecologicalprocesses.com/content/2/1/32

**Revendications**

1. **Méthode générique et interopérable de fertilisation raisonnée pour l'agriculture durable au niveau de la parcelle** comportant une série de *rendements azotés,* RDN (kg-N$_{grain}$/hectare), correspondant à divers *taux de fertilisations azotées,* TUN (kg-N$_{fertilisan}$/hectare), et *rendements unitaires,* RUN (kg-N$_{grain}$/kg-N$_{fertilisant}$), propices à la *conservation de la matière organique du sol* et applicable à des parcelles agricoles de grandes cultures non-Fabaceae telles que les cultures céréalières d'hivers et de printemps, le colza, le tournesol et le maïs-grain, et comprenant la récolte de l'ensemble de la parcelle sans établissement de bandes-essais, et le calcul de ces couples [ RDN ↔ TUN ], à l'aide d'un nouveau concept, le besoin unitaire de la pratique culturale, a_AgroNum (a$_{AgroNum}$) caractéristique de pratiques culturales durables et dérivé de RUN = run$^2$/d$_{RUN}$ de la sorte ;

$$a_{AgroNum} = \frac{1}{\sqrt{RUN \cdot d_{RUN}}}$$

de manière à ce que, connaissant RDN, l'objectif de rendement azoté durable souhaité puisse donc être rétro-calculé le taux de fertilisation azotée, TUN, qui lui corresponds ;

$$TUN = RDN \; x \; a_{AgroNum}$$

ou alternativement, en rétro-calculant l'objectif de rendement azoté, RDN, connaissant le taux de fertilisation azoté, TUN, que l'on souhait valorisé ;

$$RDN = TUN \; / \; a_{AgroNum}$$

> ainsi que ;

*l'évaluation de la durabilité* de la pratique culturale en œuvre lors de l'élaboration du *rendement en grain,* RDT, et/ou selon les intentions, habitudes et souhaits de l'agriculteur/rice ;

• un protocole de pilotage de la fertilisation azotée pour la dispense, le fractionnement, l'application au champ et/ou l'éventuel pilotage intra-saisonnier de ces différentes fractions de doses prévisionnelles d'engrais azoté, TUN, consistant en plusieurs fractions d'apports successifs d'azote y compris avantageusement l'ajustement du dernier apport en prenant en compte les observations sur l'état de la culture à l'aide d'outils de pilotage permettant d'évaluer l'état de la nutrition azotée de la culture.

• une <u>actualisation dynamique</u> au fil du temps de l'objectif de rendement selon la météorologie et/ou les cumuls thermiques et hydriques constatés et caractéristiques du lieu où est située la parcelle agricole consistant en une méthode reconnue de prédiction dynamique en cours de saison, intra-annuellement, des rendements, avantageusement azotés, RDN, de grandes-cultures non-Fabaceae, comportant le plus souvent une analyse bayésienne de la probabilité de réalisation dudit objectif de rendement azoté en cours d'élaboration sur le lieu d'une parcelle agricole en particulier ou encore,

• une approche <u>d'agriculture de précision</u> comportant une modulation intra-parcellaire des doses d'intrants à la production appliquées, notamment des susdites doses-prévisionnelles de fertilisation azotée, TUN, consistant en une modulation intra-parcellaire des taux d'applications desdits intrants - matières fertilisantes, pesticides, etc., de manière à apporter aux différentes zones de productivités inhérentes différentes à l'intérieure d'une même parcelle la dose prévisionnelle, TUN, qui lui est prescrite,

**caractérisée en ce que** ces couples [RDN ↔ TUN] durables sont rapportées sur une seule et unique courbe de réponse des RDN à TUN, *générique* et applicable à l'ensemble des susdites grandes cultures implantées sur la parcelle agricole, peu importe le type et la nature des intrants composant l'itinéraire de la pratique culturale sur cette parcelle, de manières à ce que ces TUN correspondant à ces RDN fassent maintenant office de doses prévisionnelles, et vice et versa, que ces RDN correspondant à ces TUN, d'objectifs de rendements durables,

> sachant que

la susdite *évaluation de la durabilité* d'une quelconque pratique culturale consiste en une méthode d'évaluation et de parangonnage de la durabilité de pratiques culturales en agronomie au niveau de la parcelle agricole comprenant la récolte de l'ensemble de la parcelle sans bandes-essais, à savoir ;

• la détermination d'une *référence pédoclimatique,* rTSQ, pour la parcelle,
• la détermination de la *performance agronomique* de l'intrant, TSQ, pour la parcelle,
• la mise en relation de TSQ par rapport à rTSQ donnant eTSQ = [TSQ/rTSQ - 1],

et de même pour ce qui concerne eASQ = [ASQ/rASQ - 1] et eQSQ = [QSQ/rQSQ - 1], de manière à comptabiliser complétement l'effet eTRT non seulement de l'intrant à titre de traitement (T) à l'essai sur le rendement observé mais aussi celui du choix de l'objectif de rendement quinquennal moyen (Q) tel qu'affecté par la météorologie de l'année en cour (A),

➢ et que

l'intrant en question n'en n'est pas un et que l'évaluation de l'efficacité relative (e) d'un tel pseudo-traitement - un galop d'essai (dry run, angl.), ne modifie donc pas l'actuelle pratique culturale de la parcelle et peut donc être posée comme nulle, i.e. eTRT ≡ 0, sachant que formellement eTRT = [eTSQ - eQSQ - eASQ] et donc maintenant eTSQ = [eQSQ + eASQ] lorsque que eQSQ = QSQ/rQSQ et eASQ = ASQ/rASQ puisque que QSQ est l'objectif de rendement conventionnel pour la parcelle par rapport à un certain indice de productivité en biomasse de la parcelle, iSQ, ASQ le potentiel de rendement local ou régional affecté par la climatologie réalisée cette année là - i.e. la météorologie - rQSQ et rASQ les deux références pédoclimatiques propres à QSQ et ASQ, et plus particulièrement, ici, **en ce que** ;

• la durabilité de l'itinéraire technique est assurée lorsque TSQ ≈ rTSQ,
• si le différentiel TSQ - rTSQ est positif l'itinéraire technique est *trop **intensif*** et l'objectif de rendement doit être réduit, ou dans le cas contraire,
• si ce différentiel TSQ est négatif l'itinéraire technique est *trop **extensif*** et ce même objectif de rendement doit, ou du moins peut être augmenté,

sachant que le degré de durabilité de l'itinéraire technique est proportionnel à la distance verticale [y:x] suivant l'ordonnée (y) séparant cette valeur de TSQ = rendement/iSQ de la droite [y:x] = [1:1] décrivant une correspondance parfaite entre TSQ et rTSQ,

> et, enfin, **en ce que**,

TSQ et rTSQ sont exprimés en termes de rendement unitaire (RUN ; kg-$N_{grain}$/kg-$N_{fertilisant}$) de sorte que (r)RUN = (r)$TSQ_{RUN}$ x iSQ, RUN étant ici égale à $run^2$/$d_{RUN}$ sachant que run est le rendement unitaire *simple* avant correction en fonction de $d_{RUN}$ = [$a \cdot TUN^{-b}$], les coefficients $a$ et $b$ provenant de relations empiriques décrivant la décroissance de run avec l'augmentation de TUN exprimé en équivalents kg-$N_{fertilisan}$/hectare.

2. **Méthode générique et interopérable de fertilisation raisonnée pour l'agriculture durable au niveau de la parcelle** selon la première revendication **caractérisée en ce que** les coefficients empiriques $a$ et $b$ se situent entre 1200 ↔ 1500 et 1,40 ↔ 1,60, respectivement, mais plus avantageusement **en ce que $a$** est égale à 1400 et $b$ à 1,50.

3. **Méthode générique et interopérable de fertilisation raisonnée pour l'agriculture durable au niveau de la parcelle** selon une quelconque des deux revendications précédentes **caractérisée en ce que** TSQ et rTSQ, lorsque eTRT ≡ 0, i.e. en absence de modifications de la pratique culturale lors d'un galop d'essai sans nouveaux intrants à l'essai sur la parcelle, font ici référence aux rendements observés - ou actuels, RSQ, et rendements de références durables, rRSQ, respectivement, ces derniers, rRSQ, faisant office de parangons (*benchmark,* angl.) de durabilité.

4. **Méthode générique et interopérable de fertilisation raisonnée pour l'agriculture durable au niveau de la parcelle** selon une quelconque des revendications précédentes **caractérisée en ce que** par durable il est convenu que les $RSQ_{RUN}$ trop élevés ou trop faibles par rapport à la valeur $rRSQ_{RUN}$ durable correspondant sont systématiquement exclus du jeu de données prédictif.

5. **Méthode générique et interopérable de fertilisation raisonnée pour l'agriculture durable au niveau de la parcelle** selon une quelconque des deux revendications précédentes **caractérisée en ce que** RSQ & rRSQ sont jugés suffisamment similaires lorsque la différence entre RSQ et rRSQ exprimée en termes de RUN, i.e. $RSQ_{RUN}$ & $rRSQ_{RUN}$, est de +/- 5 à 15%, plus précisément +/- 8 à 12% et avantageusement environ +/-10% de celle de rRSQ, lorsque que ces RSQ & rRSQ exprimés en termes de RUN (kg-$N_{grain}$/kg-$N_{fertilisant}$), c'est-à-dire le rendement azoté, RDN, par kg-$N_{fertilisant}$ (TUN; kg-$N_{fertilisant}$/ha) calculé comme le rapport RUN = $run^2$/$d_{RUN}$ sachant que, encore une fois, run est le rendement unitaire et $d_{RUN}$ = [$a \cdot TUN^{-b}$], $a$ et $b$ étant des coefficients empiriques décrivant la diminution progressive de l'exécution avec l'augmentation de TUN applicable à l'ensemble des susdites grandes cultures.

6. **Méthode générique et interopérable de fertilisation raisonnée pour l'agriculture durable au niveau de la parcelle** selon une quelconque des revendications précédentes **caractérisée en ce que** les références pédoclimatiques rTSQ, rRSQ, rQSQ et rASQ sont déterminées à l'aide d'une méthode prédictive dite d'intelligence artificielle comprenant un vaste ensemble de variables agropédoclimatiques (Var_APC).

7. **Méthode générique et interopérable de fertilisation raisonnée pour l'agriculture durable au niveau de la parcelle** selon une quelconque des revendications précédentes **caractérisée en ce que** la courbe de réponse à l'azote comprenant les différents taux de fertilisation azotée et leurs objectifs de rendements azotée, RDN, durables correspondants est interopérable avec les susdites technologies de fertilisation raisonnée en agriculture durable via une quelconque technologies de communications, à savoir des réseaux cellulaires, wifi, des cartes mémoires, *clouds* (sic, angl.), clefs USB insérables, ou encore plus par téléphone ou facsimilée, ou même par simple activations manuelle, vocale ou écrite s'il le fallait.

**Patentansprüche**

1. **Generische und interoperable Methode zur nachhaltigen Düngung für nachhaltige Landwirtschaft, auf Ebene der Parzelle,** die eine Reihe von *Stickstofferträgen,* RDN (kg- $N_{Korn}$/Hektar), umfasst, die verschiedenen *Stickstoffdüngungsraten,* TUN (kg- $N_{Dünger}$/Hektar), und *Einheitserträgen,* RUN (kg $N_{Korn}$/kg-$N_{Dünger}$), entsprechen, die für die *Erhaltung der organischen Bodensubstanz* förderlich sind und auf landwirtschaftliche Parzellen mit Non-Fabaceae-Kulturen wie Winter- und Sommergetreide, Raps, Sonnenblumen und Körnermais anwendbar sind und die Ernte der gesamten Parzelle ohne Einrichtung von Teststreifen sowie die Berechnung dieser Paare [RDN ↔ TUN] umfasst, unter Verwendung eines neuen Konzepts, des Einheitsbedarfs der Anbaupraxis, a_AgroNum ($a_{AgroNum}$), der charakteristisch für nachhaltige Anbaupraktiken ist und sich von RUN = $run^2$/$d_{RUN}$ ableitet, nach der Formel;

$$a_{AgroNum} = \cfrac{1}{\sqrt{RUN \cdot d_{RUN}}}$$

sodass, bei Kenntnis von RDN, dem erwünschten Ziel für einen nachhaltigen Stickstoffertrag, daraus die entsprechende Stickstoffdüngungsrate TUN zurückgerechnet werden kann;

$$TUN = RDN \times a_{AgroNum}$$

oder alternativ durch Rückrechnung des angestrebten Stickstoffertrags, RDN, in Kenntnis der Stickstoffdüngermenge, TUN, die man verwerten möchte;

$$RDN = TUN / a_{AgroNum}$$

> sowie;

Die *Bewertung der Nachhaltigkeit* der angewandten Anbaupraxis bei der Ermittlung des *Kornertrags,* RDT, und/oder gemäß den Absichten, Gewohnheiten und Wünschen des Landwirts/der Landwirtin;

• ein Protokoll zur Steuerung der Stickstoffdüngung für die Ausbringung, die Aufteilung, die Anwendung auf dem Feld und/oder die eventuelle innersaisonale Steuerung dieser verschiedenen Teilgaben von vorgesehenen Stickstoffdüngerdosen, TUN, bestehend aus mehreren Fraktionen von aufeinanderfolgenden Stickstoffgaben einschließlich vorteilhafterweise der Anpassung der letzten Gabe unter Berücksichtigung der Beobachtungen über den Zustand der Kultur mithilfe von Steuerungsinstrumenten, die es ermöglichen, den Zustand der Stickstoffernährung der Kultur zu bewerten.
• eine dynamische Aktualisierung des Ertragsziels im Zeitverlauf, entsprechend der Meteorologie und/oder den festgestellten und für den Ort, an dem sich die landwirtschaftliche Parzelle befindet, charakteristischen Wärme- und Wasserkumulationen, bestehend aus einer anerkannten Methode zur dynamischen Vorhersage der Erträge im Verlauf der Saison, vorteilhafterweise der Stickstofferträge, RDN, von Ackerkulturen, die nicht zu den Fabaceae gehören, die am häufigsten eine Bayes'sche Analyse der Wahrscheinlichkeit des Erreichens des genannten Ziels für den Stickstoffertrag umfasst, der auf einer bestimmten landwirtschaftlichen Parzelle entsteht, oder auch,
• ein Ansatz der Präzisionslandwirtschaft, der eine parzelleninterne Modulation der angewandten Dosen von Produktionsmitteln umfasst, insbesondere der oben genannten vorgesehenen Dosen der Stickstoffdüngung, TUN, bestehend aus einer parzelleninternen Modulation der Anwendungsraten der genannten Produktionsmittel - Düngemittel, Pestizide, usw., um den verschiedenen Zonen unterschiedlicher inhärenter Produktivität innerhalb derselben Parzelle die vorgesehene Dosis, TUN, zuzuführen, die ihr jeweils vorgeschrieben wird,

**dadurch gekennzeichnet, dass** diese nachhaltigen [RDN ↔ TUN]-Paare auf eine einzige, *generische* RDN-zu-TUN-Reaktionskurve bezogen werden, die für alle oben genannten landwirtschaftlichen Kulturen auf der landwirtschaftlichen Parzelle anwendbar ist, unabhängig von der Art und dem Wesen der Betriebsmittel, die den Ablauf der Anbaupraxis auf dieser Parzelle bilden, so dass diese TUN, die diesen RDN entsprechen, nun als vorgesehene Dosen fungieren und umgekehrt diese RDN, die diesen TUN entsprechen, als nachhaltige Ertragsziele fungieren,

> wobei gilt, dass,

die oben genannte *Bewertung der Nachhaltigkeit* einer beliebigen Anbaupraxis aus einer Methode zur Bewertung und zum Vergleich der Nachhaltigkeit von Anbaupraktiken in der Agrarwissenschaft auf der Ebene der landwirtschaftlichen Parzelle besteht, die die Ernte der gesamten Parzelle ohne Teststreifen umfasst, nämlich:

• die Bestimmung einer *bodenklimatischen Referenz,* rTSQ, für die Parzelle,
• die Bestimmung der *agronomischen Leistung* des Inputs, TSQ, für die Parzelle,
• die Verknüpfung von TSQ zu rTSQ ergibt eTSQ = [TSQ/rTSQ - 1],

und auch ebenso eASQ = [ASQ/rASQ - 1] und eQSQ = [QSQ/rQSQ - 1], um den Effekt eTRT nicht nur des Behandlungsinputs (T) im Versuch auf den beobachteten Ertrag, sondern auch den Effekt der Wahl des durchschnittlichen fünfjährigen Ertragsziels (Q), so wie es durch das Wetter des laufenden Jahres (A) beeinflusst wird, vollständig zu verbuchen,

> und,

der betreffende Input keiner ist und die Bewertung der relativen Wirksamkeit (e) einer solchen Pseudo-Behandlung - eines Probelaufs (dry run, engl.) - daher die aktuelle Anbaupraxis auf dem Feld nicht verändert und daher als Null angenommen werden kann, d. h. eTRT $\equiv$ 0, wobei formal eTRT = [eTSQ - eQSQ - eASQ] und damit nun eTSQ = [eQSQ + eASQ], wenn eQSQ = QSQ/rQSQ und eASQ = ASQ/rASQ, da QSQ das konventionelle Ertragsziel für die Parzelle im Vergleich zu einem bestimmten Biomasseproduktivitätsindex der Parzelle ist, iSQ, ASQ das lokale oder regionale Ertragspotenzial, das durch die in diesem Jahr stattfindende Klimatologie beeinflusst wird - d.h. die Meteorologie - rQSQ und rASQ die beiden für QSQ und ASQ spezifischen Bodenklimareferenzen, und noch spezieller, hier, dadurch, dass ;

• die Nachhaltigkeit des technischen Ablaufs gewährleistet ist, wenn TSQ $\approx$ rTSQ,
• wenn die Differenz TSQ - rTSQ positiv ist, ist der technische Ablauf *zu intensiv* und das Ertragsziel muss reduziert werden, oder im umgekehrten Fall,
• wenn diese TSQ-Differenz negativ ist, ist der technische Ablauf *zu extensiv* und ebendieses Ertragsziel muss oder zumindest kann erhöht werden,

wobei der Grad der Nachhaltigkeit des technischen Ablaufs proportional zum vertikalen Abstand [y:x] ist, der der Ordinate (y) folgt, die diesen Wert von TSQ = Ertrag/iSQ von der Geraden [y:x] = [1:1] trennt, und eine perfekte Übereinstimmung zwischen TSQ und rTSQ beschreibt,

> und schließlich dadurch, dass

TSQ und rTSQ als Ertrag pro Einheit ausgedrückt werden (RUN ; kg-$N_{Korn}$/kg-$N_{Dünger}$) so dass (r)RUN = (r)$TSQ_{RUN}$x iSQ, wobei RUN hier gleich $run^2/d_{RUN}$ ist, wobei run der *einfache* Einheitsertrag vor der Korrektur als Funktion von $d_{RUN}$ = [$a \cdot TUN^{-b}$] ist, wobei die Koeffizienten *a* und *b* aus empirischen Beziehungen stammen, die die Abnahme von run mit zunehmendem TUN beschreiben, ausgedrückt in Äquivalenten kg-$N_{Dünger}$/Hektar.

2. **Generische und interoperable Methode zur nachhaltigen Düngung für nachhaltige Landwirtschaft, auf Ebene der Parzelle nach dem ersten Anspruch, dadurch gekennzeichnet, dass** die empirischen Koeffizienten *a* und *b* zwischen 1200 $\leftrightarrow$ 1500 bzw. 1,40 $\leftrightarrow$ 1,60 liegen, vorteilhafter jedoch dadurch, dass *a* gleich 1400 und **b** gleich 1,50 ist.

3. **Generische und interoperable Methode zur nachhaltigen Düngung für nachhaltige Landwirtschaft, auf Ebene der Parzelle** nach einem der beiden vorhergehenden Ansprüche, **dadurch gekennzeichnet, dass** TSQ und rTSQ, wenn eTRT $\equiv$ 0, d. h. ohne Änderungen der Anbaupraxis während eines Probelaufs ohne neue Inputs, die auf der Parzelle getestet werden, hier bezogen sind auf die beobachteten - oder aktuellen - Erträge, RSQ, sowie auf die nachhaltigen Referenzerträge, rRSQ, wobei letztere, rRSQ, als *Benchmark* für Nachhaltigkeit fungieren.

4. **Generische und interoperable Methode zur nachhaltigen Düngung für nachhaltige Landwirtschaft, auf Ebene der Parzelle** nach einem der vorhergehenden Ansprüche, **dadurch gekennzeichnet, dass** für Nachhaltigkeit festgelegt ist, dass die $RSQ_{RUN}$ , die zu hoch oder zu niedrig im Vergleich zum entsprechenden nachhaltigen $rRSQ_{RUN}$-Wert sind, systematisch aus dem Vorhersagedatensatz ausgeschlossen werden.

5. **Generische und interoperable Methode zur nachhaltigen Düngung für nachhaltige Landwirtschaft, auf Ebene der Parzelle** nach einem der beiden vorhergehenden Ansprüche, **dadurch gekennzeichnet, dass** RSQ & rRSQ als ausreichend ähnlich angesehen werden, wenn die Differenz zwischen RSQ und rRSQ, ausgedrückt als RUN, d. h. $RSQ_{RUN}$ & $rRSQ_{RUN}$, +/- 5 bis 15 %, genauer gesagt +/- 8 bis 12 % und vorteilhafterweise etwa +/- 10 % des rRSQ beträgt, wenn diese RSQ & rRSQ, ausgedrückt als RUN (kg- $N_{Korn}$/kg-$N_{Dünger}$), das bedeutet der Stickstoffertrag, RDN, pro kg-$N_{Dünger}$ (TUN; kg-$N_{Dünger}$/ha), berechnet als das Verhältnis RUN = $run^2/d_{RUN}$ wobei wiederum run der Einheitsertrag ist und $d_{RUN}$ = [$a \cdot TUN^{-b}$], wobei *a* und *b* empirische Koeffizienten sind, die die allmähliche Abnahme des Laufs mit zunehmender TUN beschreiben, die auf alle oben genannten Feldfrüchte anwendbar ist.

6. **Generische und interoperable Methode zur nachhaltigen Düngung für nachhaltige Landwirtschaft, auf Ebene der Parzelle nach einem der** vorhergehenden Ansprüche, **dadurch gekennzeichnet, dass** die pedoklimatischen Referenzen rTSQ, rRSQ, rQSQ und rASQ mithilfe einer prädiktiven Methode bestimmt werden, die als künstliche Intelligenz bezeichnet wird, und die einen umfangreichen Satz von agropedoklimatischen Variablen (Var_APC) umfasst.

7. **Generische und interoperable Methode zur nachhaltigen Düngung für nachhaltige Landwirtschaft, auf Ebene der Parzelle** nach einem der vorhergehenden Ansprüche, **dadurch gekennzeichnet, dass** die Reaktionskurve auf Stickstoff, die die verschiedenen Stickstoff-Düngungsraten und ihre entsprechenden nachhaltigen Stickstoff-Ertragsziele, RDN, umfasst, mit den oben genannten Technologien zur systematischen Düngung in der nachhaltigen Landwirtschaft über eine beliebige Kommunikationstechnologie interoperabel ist, d. h. über Mobilfunknetze, WiFi, Speicherkarten, *Clouds* (sic, engl.), ansteckbare USB-Sticks, oder mehr noch über Telefon oder Faksimile, oder sogar durch einfache manuelle, sprachliche oder schriftliche Aktivierungen, wenn es sein muss.

**Claims**

1. **Generic and interoperable method of sustainable fertilisation for sustainable agriculture at the plot level** comprising a series of *nitrogen yields,* RDN (kg-$N_{grain}$/hectare), corresponding to various *nitrogen fertilization rates,* TUN (kg-$N_{fertiliser}$/hectare), and *nitrogen fertilizer use* efficiencies , RUN (kg-$N_{grain}$/kg-$N_{fertiliser}$), conducive to the *conservation of soil organic matter* and applicable to agricultural plots of non-Fabaceae field crops such as winter and spring cereal crops, rapeseed, sunflower and grain maize, and including the harvesting of the whole plot without the establishment of test strips, and the calculation of these pairs [ RDN $\leftrightarrow$ TUN], with the help of a new concept, the nitrogen fertilizer requirement of the cropping practice, a_AgroNum ($a_{AgroNum}$) characteristic of sustainable cropping practices and derived from RUN = run$^2$/$d_{RUN}$ in this way;

$$a_{AgroNum} = \frac{1}{\sqrt{RUN \cdot d_{RUN}}}$$

so that knowing RDN, the desired sustainable nitrogen target yield can therefore be retro-calculated as the corresponding nitrogen fertilization rate, TUN;

$$TUN = RDN \; x \; a_{AgroNum}$$

or alternatively, by reversing the nitrogen target yield, RDN, knowing the nitrogen fertilization rate, TUN, which we want to apply;

$$RDN = TUN \; / \; a_{AgroNum}$$

➢ as well as;

the *evaluation of the sustainability* of the cropping practice implemented during the development of *the grain yield,* RDT, and/or according to the intentions, habits and wishes of the farmer;

• a <u>nitrogen fertilization management protocol</u> for the dispensing, fractionation, field application and/or possible intra-seasonal management of these different fractions of forecast nitrogen fertilizer doses, TUN, consisting of several fractions of successive nitrogen inputs, including advantageously the adjustment of the last application by taking into account observations on the state of the crop using management tools to assess the nitrogenous nutrition status of the crop.
• a <u>dynamic update</u> over time of the target yield according to the meteorology and/or the thermal and water accumulations observed and characteristic of the place where the agricultural plot is located, consisting of a recognized method of dynamic prediction during the season, intra-annually, of the yields, advantageously nitrogen, RDN, of non-Fabaceae field crops, most often including a Bayesian analysis of the probability of achieving that RDN nitrogen target yield at that site of a particular agricultural plot or,
• a <u>precision agriculture</u> approach comprising an intra-plot modulation of the doses of inputs to production applied, in particular the above-mentioned recommended doses of nitrogen fertilization, TUN, consisting of intra-plot modulation of the application rates of the said inputs - fertilizers, pesticides, etc., to the various zones of inherently different productivity within the same plot in accordance with the overall prescribed recommended TUN nitrogen fertilizer dose,

**characterized in that** these sustainable pairs [RDN ↔ TUN] are reported on a single curve of the response of RDN to TUN, generic and applicable to all the abovementioned field crops planted on the agricultural plot, regardless of the type and nature of the inputs making up the itinerary of the cropping practice on that plot, so that these NURs corresponding to these RDNs now serve as recommended doses, and vice versa, and these RDNs corresponding to these TUNs, as sustainable target yields,

➢ knowing that (EP20194102.8),

the aforementioned *evaluation of the sustainability* of any cropping practice consists of a method of evaluating and benchmarking the sustainability of cropping practices in agronomy at the level of the agricultural plot including the harvesting of the entire plot without test strips, namely;

• the determination of a *pedoclimatic reference,* rTSQ, for the plot,
• the determination of the *agronomic performance* of the input, TSQ, for the plot,
• the relationship of TSQ with respect to rTSQ giving eTSQ = [TSQ/rTSQ - 1],

and likewise for eASQ = [ASQ/rASQ - 1] and eQSQ = [QSQ/rQSQ - 1], so as to fully account for the eTRT effect not only of the input as a test treatment (T) on the observed yield but also of the choice of the average five-year target yield (Q) as affected by the weather of the current year (A),

➢ **characterized in that** (EP22152629.6),

the input in question is not an input and that the evaluation of the relative efficacy (e) of such a pseudo-treatment - a dry run, therefore does not modify the current cropping practice of the plot and can therefore be set as null, i.e. eTRT ≡ 0, knowing that formally eTRT = [eTSQ - eQSQ - eASQ] and therefore now eTSQ = [eQSQ + eASQ] when eQSQ = QSQ/rQSQ and eASQ = ASQ/rASQ since QSQ is the conventional target yield for the plot in relation to a certain biomass productivity index of the plot, iSQ, ASQ the local or regional yield potential affected by the climatology carried out that year - i.e. meteorology - rQSQ and rASQ the two pedoclimatic references specific to QSQ and ASQ, and more particularly, here, **in that**;

• the sustainability of the cropping schedule is ensured when TSQ ≈ rTSQ,
• if the TSQ - rTSQ differential is positive, the cropping schedule is *too **intensive*** and the performance objective must be reduced, or if not,
• if this TSQ differential is negative, the cropping schedule is *too **extensive*** and this same performance objective must, or at least can be increased,

knowing that the degree of sustainability of the cropping schedule is proportional to the vertical distance [y:x] following the ordinate (y) separating this value of TSQ = efficiency/iSQ from the line [y:x] = [1:1] describing a perfect correspondence between TSQ and rTSQ,

➢ and, finally, **in that**,
TSQ and rTSQ are expressed in terms of nitrogen fertilizer use efficiency (RUN; kg-N$_{grain}$/kg-N$_{fertilizer}$) so that (r) RUN = (r)TSQRUN x iSQ, RUN being here equal to run$^2$/d$_{RUN}$ knowing that run is the simple nitrogen fertilizer use efficiency before adjustment via to d$_{RUN}$ = [*a* · TUN$^{-b}$], the empirical coefficients a and b of this relationship describing the decrease of run with the increase in TUN expressed in kg-N fertilizer equivalents/hectare.

2. **A generic and interoperable method of integrated fertilizer management for sustainable agriculture at the plot level** according to the first claim, **characterized in that** the empirical coefficients *a* and *b* are between 1200 ↔ 1500 and 1.40 ↔ 1.60, respectively, but more advantageously **in that** *a* is equal to 1400 and *b* is equal to 1.50.

3. **Generic and interoperable method of integrated fertilizer management for sustainable agriculture at the plot level** according to any of the two preceding claims **characterized in that** TSQ and rTSQ, when eTRT ≡ 0, i.e. in the absence of changes in the cropping practice during a trial run without new inputs being tested on the plot, refer here to the observed - or current, RSQ, and sustainable benchmark yields, rRSQ, respectively, with the latter, rRSQ, acting as benchmarks of sustainability.

4. **A generic and interoperable method of integrated fertilizer management for sustainable agriculture at the plot level** according to any of the above claims, **characterized in that** by sustainable it is agreed that RSQ$_{RUN}$'s that are either too high or too low in relation to the corresponding $rRSQ_{RUN}$ sustainable value are systematically excluded from the predictive dataset.

5. **A generic and interoperable method of integrated fertilizer management for sustainable agriculture at the plot level** according to any of the two preceding claims **characterized in that** RSQ & rRSQ are found to be sufficiently similar when the difference between RSQ and rRSQ expressed in terms of RUN, i.e. $RSQ_{RUN}$ & $rRSQ_{RUN}$, is +/- 5 to 15%, more precisely +/- 8 to 12% and advantageously about +/- 10% of that of rRSQ, when these RSQ & rRSQ expressed in terms of RUN ($kg\text{-}N_{grain}/kg\text{-}N_{fertilizer}$), i.e. the RDN grain nitrogen yield per $kg\text{-}N_{fertilizer}$ (TUN; $kg\text{-}N_{fertilizer}/ha$) calculated as the ratio $RUN = run^2/d_{RUN}$ knowing that, once again, run is the nitrogen fertilizer use efficiency and $d_{RUN} = [a \cdot TUN^{-b}]$, **a** and **b** being empirical coefficients describing its progressive decrease function of TUN increase applicable to all the above-mentioned field crops.

6. **A generic and interoperable method of integrated fertilizer management for sustainable agriculture at the plot level** according to any of the preceding claims, **characterized in that** the pedoclimatic references rTSQ, rRSQ, rQSQ and rASQ are determined using a so-called artificial intelligence predictive method comprising a large set of agro-pedoclimatic variables (Var_APC).

7. **Generic and interoperable method of integrated fertilizer management for sustainable agriculture at the plot level** according to any of the preceding claims, **characterized in that** the nitrogen response curve comprising the different TUN nitrogen fertilization rates and their corresponding sustainable RDN grain nitrogen target yields is interoperable with the aforesaid sustainable fertilization technologies in sustainable agriculture via any means of communications, namely cellular networks, WiFi, memory cards, *clouds,* insertable USB keys, phone or facsimile, or even by simple manual, voice or written activation if necessary.

[Figure 1]

RDN - rRDN (kg-Ngrain/hectare)

[Figure 2]

a$_{AgroNum}$ (kg-Nfertilsant/kg-Ngrain)

[Figure 3]

$$\text{RSQ} \left\{ \frac{\dfrac{\text{run}^2}{\text{d}_{\text{RUN}}}}{\text{iSQ}} \right.$$

$\text{run}^2$ ← Le rendement unitaire « simple » de l'engrais N

$\text{d}_{\text{RUN}}$ ← Facteur pour comparer des modalités à différents TUN

iSQ ← Indice de la productivité inhérente du sol (eg. Toth et al. 2017)

rRSQ ← Référence AgroNum™ pour la parcelle selon EP22152629.6

[Figure 4)

OBJECTIF DE RENDEMENT AZOTÉ, RDN, « DURABLE »

RDN' @ ti

RDN @ t0

TUN @ t0

TUN' @ ti

TAUX DE FERTILISATION N, TUN

[Figure 5]

## 47.90320 N 01.50890 E - FRB0

[Figure 6]

## 49.87489 N 03.02599 E – FRE2

$RDN = 44.178 \times TUN^{0.2536}$
$R^2 = 0.999$

157 RDN'

146 RDN

148 TUN'

110 TUN

$TUN = 3.282E\text{-}07 \times RDN^{3.942E+00}$
$R^2 = 9.965E\text{-}01$

[Figure 7]

## 44.19547 N 26.02096 E – RO31

[Figure 8]

[Figure 9]

[Figure 10]

[Figure 11]

[Figure 12]

**Coordonnées GPS les plus au centre de la parcelle et le taux de fertilisation-N (TUN) souhaité**

**Objectif de rendement azoté (RDN) « durable »**

Approche basée sur l'intelligence artificielle (IA) et le traitement de données agro-pédoclimatiques géoréférencées existantes ;

✓ Pas d'échantillonnage de la parcelle ...
✓ Pas de drones, capteurs, 5G ...
✓ Pas d'image satellite HR ...
✓ Pas de « shapefiles » RPG ...
✓ Pas de détails sur les pratiques culturales ou les intrants...

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3335536 A
- EP 22152629
- EP 20194102
- EP 20194108

**Littérature non-brevet citée dans la description**

- **BATJES et al.** Standardised soil profile data to support global mapping and modelling (WoSIS snapshot 2019. *Earth Syst. Sci. Data*, 2020, vol. 12, 299-320
- **BENJAMIN et al.** Crop Management Effects on Crop Residue Production and Changes in Soil Organic Carbon in the Central Great Plains.. *Agron. J*, 2010, vol. 102 (3), 990-997
- **BOGARD et al.** Deviation from the grain protein concentration-grain yield negative relationship is highly correlated to post-anthesis N uptake in winter wheat.. *J. Exp. Bot.*, 2010, vol. 61 (15), 4303-4312
- **BRUNDTLAND, G.** Report of the World Commission on Environment and Development: Our Common Future.. *United Nations General Assembly document A/42/427*, 1987
- **CLAUDE ; FILLION**. Effet de l'apport d'un inoculum bactérien aux résidus de culture de maïs-grain au sol sur le rendement et la qualité de blés d'hiver panifiables en France.. *Agrosolutions*, 2004, vol. 15 (1), 23-29
- **COMIFER**. Guide de la fertilisation raisonnée - 2. France Agricole, 2017
- **COTRUFO et al.** The Microbial Efficiency-Matrix Stabilization (MEMS) framework integrates plant litter decomposition with soil organic matter stabilization: do labile plant inputs form stable soil organic matter?. *Global Change Biology*, 2013, vol. 19, 988-995
- **EFFAH et al.** Post-anthesis Relationships Between Nitrogen Isotope Discrimination and Yield of Spring Wheat Under Different Nitrogen Levels.. *Front. Plant Sci.*, 2022, vol. 13, 859655
- European Soil Data Centre. *ESDAC*, 2019, esdac.jrc.ec.europa.eu
- **FRIEDMAN et al.** Greedy function approximation - a gradient boosting machine. *Annals of Statistics*, 2001, vol. 29 (5), 1189-1232

- **JANSSEN et al.** Nitrogen mineralization in relation to C:N ratio and decomposability of organic materials.. *Plant and Soil*, 1996, vol. 181, 39-45
- **KHAN et al.** The Myth of Nitrogen Fertilization for Soil Carbon Sequestration.. *J. Environ. Qual.*, 2007, vol. 36, 1821-1832
- **KIRKBY et al.** Accurate measurement of resistant soil organic matter and its stoichiometry.. *European Journal of Soil Science*, 2016, vol. 67, 695-705
- **KIRKBY et al.** Inorganic Nutrients Increase Humification Efficiency and C-Sequestration in an Annually Cropped Soil.. *PLoS ONE*, 2016, vol. 11 (5), e0153698
- **KUBAT et al.** Dry matter yields, nitrogen uptake and efficiency of nitrogen fertilization in long term experiments in Prague.. *Plant Soil Environ.*, 2003, vol. 49 (8), 337-345
- **LU et al.** Half-degree gridded nitrogen and phosphorus fertilizer use for global agriculture production during 1900-2013. *PANGAEA*, 2016, https://doi.org/10.1594/PANGAEA.863323
- Global nitrogen and phosphorus fertilizer use for agriculture production in the past half century: shifted hot spots and nutrient imbalance.. *Earth System Science Data*, vol. 9 (1), 181-192
- **LUGATO et al.** Potential carbon sequestration of European arable soils estimated by modelling a comprehensive set of management practices. *Global Change Biology*, 2015, vol. 20, 3557-3567
- **LUGATO et al.** A new baseline of organic carbon stock in European agricultural soils using a modelling approach.. *Global Change Biology*, 2014, vol. 20, 313-326
- **LUGATO et al.** Potential carbon sequestration of European arable soils estimated by modelling a comprehensive set of management practices.. *Global Change Biol*, 2015, vol. 20, 3557-3567
- **LUGATO et al.** Quantifying the erosion effect on current carbon budget of European agricultural soils at high spatial resolution.. *Global Change Biology*, 2016, vol. 22, 1976-1984

- **LUGATO et al.** Complementing the topsoil information of the Land Use/Land Cover Area Frame Survey (LUCAS) with modelled N2O emissions.. *PLoS ONE*, 2017, vol. 12 (4), e0176111
- **LUGATO et al.** Maximising climate mitigation potential by carbon and radiative agricultural land management with cover crops.. *Environ. Res. Lett.*, 2020, vol. 15, 094075
- **LUGATO et al.** Different climate sensitivity of particulate and mineral-associated soil organic matter.. *Nature Geoscience*, 2021, https://doi.org/10.1038/s41561-021-00744-x
- **MA et al.** Yield gap of winter wheat in Europe and sensitivity of potential yield to climate factors.. *Climate Research*, 2016, vol. 67, 179-190
- **MADJAR et al.** Improve of grain yield and quality of winter wheat by nitrogen.. *Agronomy*, 2018, vol. 61, 2285-5785
- **MAKOWSKI et al.** De l'analyse des réseaux expérimentaux à la méta-analyse : méthodes et applications avec le logiciel R pour les sciences agronomique et environnementales. *Quae78026, Versailles, France*, 2018
- **MARIE et al.** Nitrous oxide emissions and nitrate leaching in an organic and a conventional cropping system (Seine basin, France).. *Agriculture, Ecosystems and Environment*, 2015, vol. 213, 131-141
- **MIAO et al.** Long-term experiments for sustainable nutrient management in China.. *Agron. Sustain. Dev*, 2010, vol. 31, 397-414
- **MULVANEY et al.** Synthetic Nitrogen Fertilizers Deplete Soil Nitrogen: A Global Dilemma for Sustainable Cereal Production.. *J. Environ. Qual*, 2009, vol. 38, 2295-2314
- **MYNENI, R.** ; **KNYAZIKHIN, Y.** ; **PARK, T.** LAI - MOD15A2H MODIS/Terra Leaf Area Index/FPAR 8-Day L4 Global 500m SIN Grid V006.. *NASA EOSDIS Land Processes DAAC*, 2015, https://doi.org/10.5067/MODIS/MOD15A2H.00
- **NICOLARDOT et al.** Simulation of C and N mineralisation during crop residue decomposition: A simple dynamic model based on the C:N ratio of the residues.. *Plant and Soil*, 2001, vol. 228, 83-103
- **OMARA et al.** Influence of No-Tillage on Soil Organic Carbon, Total Soil Nitrogen, and Winter Wheat (Triticum aestivum L.) Grain Yield.. *International Journal of Agronomy*, 2019, vol. 2019, 9, https://doi.org/10.1155/2019/9632969
- **OMARA et al.** Variability in Winter Wheat (Triticumaestivum L.) Grain Yield Response to Nitrogen Fertilization in Long-Term Experiments. *Communications in Soil Science and Plant Analysis*, 2020
- **ORGIAZZI et al.** A knowledge-based approach to estimating the magnitude and spatial patterns of potential threats to soil biodiversity.. *Science Total Environment*, 2016, vol. 545-546 (11-20)
- **PANAGOS P** ; **VAN LIEDEKERKE M.** ; **JONES A.** ; **MONTANARELLA L.** European Soil Data Centre: Response to European policy support & public data requirements.. *Land Use Policy*, 2012, vol. 29 (2), 329-338
- **PIRES et al.** Nitrogen-Use Efficiency, Nitrous Oxide Emissions, and Cereal Production in Brazil: Current Trends and Forecasts.. *PLoS ONE*, 2015, vol. 10 (8), e0135234
- **PLAZA-BONILLA et al.** Innovative cropping systems to reduce N inputs and maintain wheatyields by inserting grain legumes and cover crops in southwesternFrance.. *Europ. J. Agronomy*, 2017, vol. 82, 331-341
- **PROKHORENKOVA et al.** CatBoost: unbiased boosting with categorical features. *arXiv:1706.09516v5*, 20 January 2019
- **RAVIER et al.** Les travaux des GREN, révélateurs de controverses autour de la méthode du bilan.. *12èmes Rencontres de la fertilisation raisonnée*, 2015
- **RAVIER et al.** Mismatch between a science-based decision tool & its use: The case of the balance-sheet method for nitrogen fertilization in France.. *NJAS - Wageningen J. Life Sci.*, 2016, vol. 79, 31
- **RAVIER et al.** Early nitrogen deficiencies favor high yield, grain protein content and N use efficiency in wheat.. *European J. Agron*, 2017, vol. 89, 16-24
- **RECKLING et al.** Methods of yield stability analysis in long-term field experiments.. *A review. Agronomy for Sustainable Development*, 2021, vol. 41, 27
- **RICHARDSON et al.** The inorganic nutrient cost of building soil carbon. *Carbon Management*, 2014, vol. 5 (3), 265-268
- **RINGEVAL et al.** Insights on nitrogen and phosphorus co-limitation in global croplands from theoretical and modelling experiments.. *Biogeosciences*, 2019, https://doi.org/10.5194/bg-2019-298
- **RODELL et al.** GLDAS - The Global Land Data Assimilation System. *Bull. Amer. Meteor. Soc*, 2004, vol. 85 (3), 381-394
- **RUSER et al.** Effect of crop-specific field management and N fertilization on N2O emissions from a fine-loamy soil.. *Nutrient Cycling in Agroecosystems*, 2001, vol. 59, 177-191
- **RUTKOWSKA et al.** Nitrogen Study on Accumulation and Allocation of Nitrogen Applied at Anthesis on Top of Early Nitrogen Applications in Winter Wheat. *Journal of Plant Nutrition*, 2009, vol. 32 (8), 1306-1320
- **SCHILS et al.** Cereal yield gaps across Europe. *European Journal of Agronomy*, 2018, vol. 101 (2018), 109-120

- **SENAPATI et al.** Large genetic yield potential and genetic yield gap estimated for wheat in Europe. *Global Food Security*, 2020, vol. 24, 100340
- **SMITH et al.** Large-scale drivers of relationships between soil microbial properties and organic carbon across Europe.. *Global Ecol Biogeogr.*, 2021, vol. 30, 2070-2083
- **STELLA et al.** Estimating the contribution of crop residues to soil organic carbon conservation.. *Environ. Res. Lett.*, 2019, vol. 14, 094008
- LPRM - README Document for LPRM Surface Soil Moisture Data Products.. **TENG et al.** Goddard Earth Sciences Data and Information Services Center (GES DISC). 2018
- **TESFAYE et al.** Model comparison and quantification of nitrous oxide emission and mitigation potential from maize and wheat fields at a global scale.. *Sci. Total Environ.*, 2021, vol. 782, 146696
- **TÓTH et al.** Continental-scale assessment of provisioning soil functions in Europe.. *Ecological Processes*, 2013, vol. 2, 32, http://www.ecologicalprocesses.com/content/2/1/32